# EUROPEAN PATENT APPLICATION

(11) **EP 4 488 015 A1**
(43) Date of publication of application: **08.01.2025**
(21) Application number: 23767077.3
(22) Date of filing: 02.03.2023
(51) Int. Cl.: B25J 11/00, B25J 5/00, B25J 9/08, B25J 13/08, B25J 13/00, B25J 19/00, H02J 50/00

(54) **ROBOT**

(30) Priority: 11.03.2022 KR 20220030761
(71) Applicant: LG Electronics Inc., Yeongdeungpo-gu Seoul 07336 (KR)
(72) Inventor: CHOI, Dongkyu, Seoul 08592 (KR)
(74) Representative: Vossius & Partner Patentanwälte Rechtsanwälte mbB
(86) International application number: PCT/KR2023/002851
(87) International publication number: WO 2023/171975

(57) **Abstract**

The present disclosure relates to a robot and relates to a robot, which includes an upper functional module that may be replaced and may provide services to users and add or change the services provided to the users by allowing the users to replace the upper functional module, thereby providing the users with various services, such as providing emotional stability by communicating with the user, transporting objects, charging mobile phones, and providing music and lighting suitable for mood, according to the user's needs.

## Description

### [Technical Field]

The present disclosure relates to a robot. More specifically, the present disclosure relates to a robot which may provide various services according to a user's command input and in which a module may be replaced according to the user's desired service.

### [Background Art]

Recently, with the advancement of a robot technology, the use of robots is increasing not only in industrial fields but also at home.

Home robots are robots that perform home tasks on behalf of people, such as helping with housework such as cleaning or controlling home appliances, or robots that act as a user's assistant or provide training to the user using artificial intelligence (AI), robots that replace companion animals, etc.

However, conventional home robots have limitations in that they perform only any one of the above functions and may not perform various functions depending on the user's needs or circumstances.

Meanwhile, there are not only robots that perform functions in a state of being fixed at a specific location but also movable mobile robots. In particular, in the case of robots used at home, the mobile robots that replace the user or move around the home while following the user are mainly used.

Among the mobile robots, two-wheeled robots with two wheels have advantages of being easy to store because they occupy a small area of ground and being easily used in homes with a relatively limited space due to a small rotation radius when the robot changes a direction.

However, the conventional two-wheeled robots have a limitation that a height of an obstacle at which the robots may pass is set in proportion to sizes of the wheels, and have a limitation that even when passing the obstacle, the robots may be not balanced due to an impact in a process of passing the obstacle, and thus the robot may fall over.

In particular, when home robots perform a function of transporting drinks or food, an object to be transported may spill or fall on the floor when the robot shakes.

In addition, since conventional home robots may perform only predetermined functions, there is a limitation that it is difficult to provide various services to users. Therefore, there is a need to provide various services to users by allowing home robots to be provided with replaceable service modules and allow the services provided to the users to be added or changed as needed.

In this case, the service modules may be coupled to any one location in all directions of the robot.

### [Disclosure]

### [Technical Problem]

A robot according to the present disclosure has been made in efforts to solve the above conventional problems.

The present disclosure is directed to providing a robot capable of providing various services such as providing emotional stability by communicating with users, transporting objects, charging mobile phones, and providing music and lighting suitable for mood by including a replaceable upper functional module.

The present disclosure is also directed to providing a multipurpose robot in which provided services may be added or changed as needed.

### [Technical Solution]

To achieve the objects, a robot according to an embodiment of the present disclosure may include a robot body in which a motor and a battery are accommodated, a leg unit coupled to each of both side surfaces of the robot body, a wheel unit rotatably coupled to the leg unit and including a wheel rolling along a ground, and an upper functional module replaceably coupled to an upper side of the robot body, wherein the upper functional module may include a flat upper plate coupled to an upper surface of the robot body, and a functional unit coupled to an upper side of the upper plate to provide a service to a user, and when the upper functional module is replaced, the service provided to the user through the functional unit may be changed.

With this configuration, the user can receive various services even without a plurality of home robots.

Specifically, the upper plate may include a flat upper plate body hook-coupled to the upper surface of the robot body, and a front coupling portion extending downward from a front end of the upper plate body and hook-coupled to a front upper side of the robot body.

With this configuration, the upper functional module may be more stably supported by the upper side of the robot body.

Here, the functional unit may include a display configured to display a preset facial expression image.

In addition, the functional unit may further include an upper plate camera configured to recognize a user's location or a location of the user's face, and the display may be operated in a preset manner according to location information recognized by the upper plate camera.

In addition, the functional unit may further include an upper plate motor configured to adjust an angle of the display, and the display may be connected to the motor and has an adjustable angle according to information about the user's location or the location of the user's face.

With this configuration, it is possible to maximize the emotional communication effect provided to the user by making the user feel that the robot expresses the emotion while facing his/her face.

Meanwhile, the functional unit may further include a speaker configured to output sound, and the speaker may output a preset sound corresponding to a preset facial expression image when the display outputs the preset facial expression image.

That is, it is possible to make the user more effectively feel the emotional communication by outputting the sound corresponding to the expressed expression together by the display.

In addition, the functional unit may include one or more microphones configured to receive the user's voice signal, identify the user's location based on the voice signal received by the microphone, and respond to the user's instruction.

Meanwhile, the functional unit may include a storage stand having an open upper side and having a space formed therein and transport an object accommodated in the internal space of the storage stand.

Furthermore, the storage stand may include a wireless charging device configured to charge a mobile phone accommodated in the internal space.

In addition, the storage stand may include a communication device configured to transmit and receive information to and from the mobile phone accommodated in the internal space.

In addition, the storage stand may further include a display configured to display the information and output the information onto the display based on the information received from the mobile phone through the communication device.

Here, the storage stand may further include a speaker configured to output sound based on the information received from the mobile phone through the communication device.

Meanwhile, the robot according to the present disclosure may move according to a preset algorithm or the user's instruction and transport the object accommodated in the storage stand.

That is, the robot may transport the object accommodated in the storage stand according to the user's real-time instruction and repeatedly transport the same according to a set rule.

In addition, the storage stand may include a cup holder formed with a space in which a drink container is accommodated.

In this case, the cup holder may include a heating wire configured to transfer heat to the drink container or a heat-insulating member configured to reduce a change in temperature of the drink container.

Meanwhile, the functional unit may include a lighting device including one or more light sources, a lighting motor configured to move the lighting device, and a speaker configured to provide sound.

In this case, the functional unit further may include a wireless communication module configured to communicate with an external terminal.

With this configuration, the user can heighten the interior mood by operating the lighting device and the speaker of the robot through the external terminal.

Detailed matters of other embodiments are included in a detailed description and accompanying drawings.

### [Advantageous Effects]

The robot according to the present disclosure may include the upper functional module that can be replaced and can provide services to users and change the services provided to the users by allowing the users to replace the upper functional module, thereby providing the users with various services such as providing emotional stability by communicating with the user, transporting objects, charging mobile phones, and providing music and lighting suitable for mood.

The robot according to the present disclosure can add or change the services provided to the users as needed.

### [Description of Drawings]

FIG. 1 is a perspective view for describing a robot according to one embodiment of the present disclosure.
FIG. 2 is an exploded perspective view of FIG. 1.
FIG. 3 is a front view of the robot according to one embodiment of the present disclosure.
FIG. 4 is a rear view of the robot according to one embodiment of the present disclosure.
FIG. 5 is a side view of the robot according to one embodiment of the present disclosure.
FIG. 6 is a bottom view of the robot according to one embodiment of the present disclosure.
FIG. 7 is a view for describing a state in which an upper functional module has been removed from the robot according to one embodiment of the present disclosure.
FIG. 8 is a view for describing a leg unit in the robot according to one embodiment of the present disclosure.
FIG. 9 is a view for describing a connection relationship of the leg unit in the robot according to one embodiment of the present disclosure.
FIG. 10 is a view for describing a second link in the robot according to one embodiment of the present disclosure.
FIG. 11 is a view for describing a structure for hiding an electric wire in the robot according to one embodiment of the present disclosure.
FIGS. 12 and 13 are views for describing a change in location of a wheel according to the movement of the leg unit in the robot according to one embodiment of the present disclosure.
FIG. 14 is a view for describing a relationship between the arrangement of the wheel and the arrangement for coupling with a lower functional module in the robot according to one embodiment of the present disclosure.
FIG. 15 is a schematic view for describing an example in which a load of a robot body is transmitted to the wheel in the robot according to one embodiment of the present disclosure.
FIG. 16 is a perspective view for describing an upper functional module of a robot according to a first embodiment of the present disclosure.
FIG. 17 is a view of FIG. 16 viewing the upper functional module at another angle.
FIG. 18 is a view for describing an upper functional module of a robot according to a second embodiment of the present disclosure.
FIG. 19 is a view for describing an upper functional module of a robot according to a third embodiment of the present disclosure.
FIG. 20 is a view for describing an upper functional module of a robot according to a fourth embodiment of the present disclosure.
FIG. 21 is a view for describing that the upper functional module is coupled to an upper surface of the robot according to the embodiment of the present disclosure.
FIGS. 22 and 23 are views for describing a lower structure of the upper functional module of the robot according to the embodiment of the present disclosure.
FIG. 24 is a view for describing a state in which a robot according to another embodiment of the present disclosure is coupled to a lower functional module.
FIG. 25 is a view for describing a state in which the robot according to another embodiment of the present disclosure approaches the lower functional module to be coupled thereto.
FIG. 26 is a view for describing the lower functional module of the robot according to another embodiment of the present disclosure.
FIG. 27 is a block diagram for describing a control configuration of the robot according to the embodiment of the present disclosure.

### [Mode for Invention]

Hereinafter, exemplary embodiments of the present disclosure will be described in detail with reference to the accompanying drawings.

Since the present disclosure may have various changes and various embodiments, specific embodiments are shown in the accompanying drawings and specifically described in the detail descriptions. This is not intended to limit the present disclosure to specific embodiments and should be construed to include all modifications, equivalents, and substitutes included in the spirit and technical scope of the present disclosure.

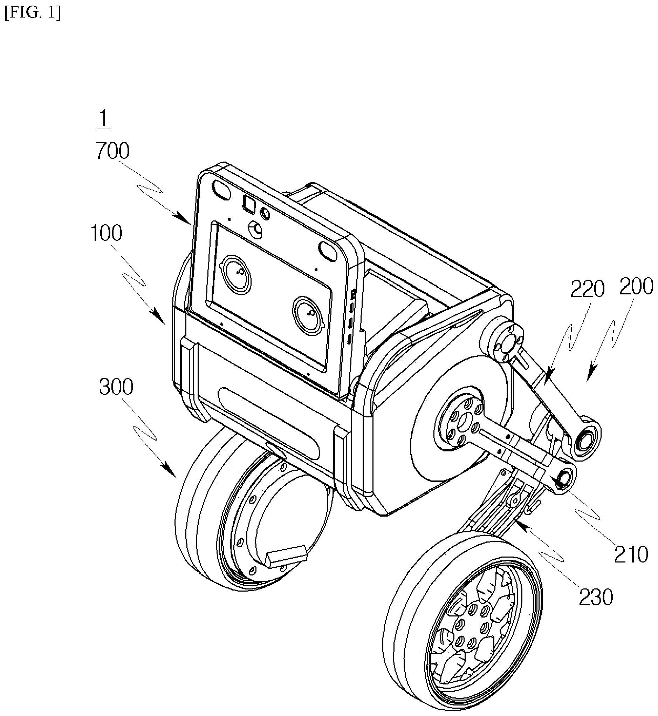

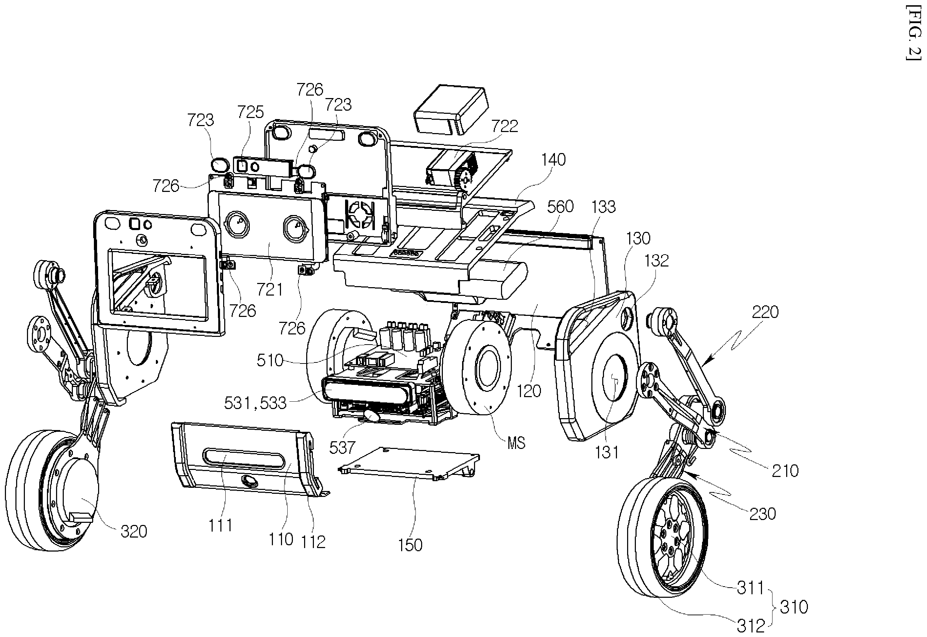

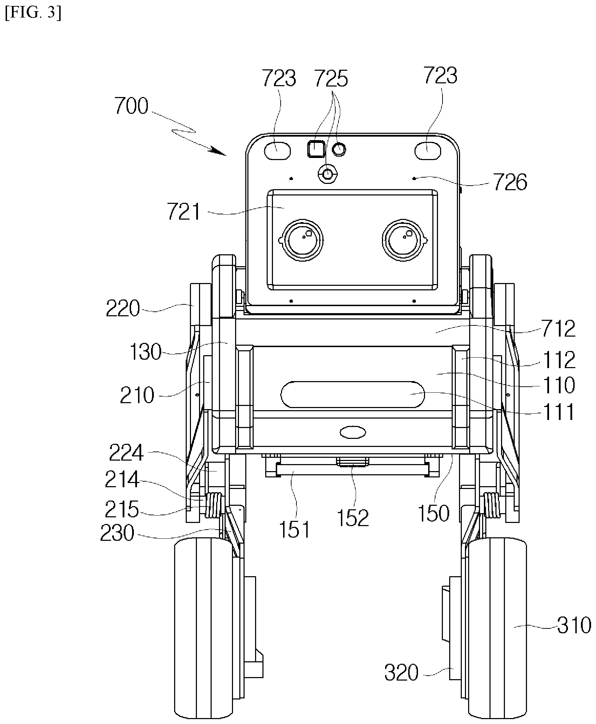

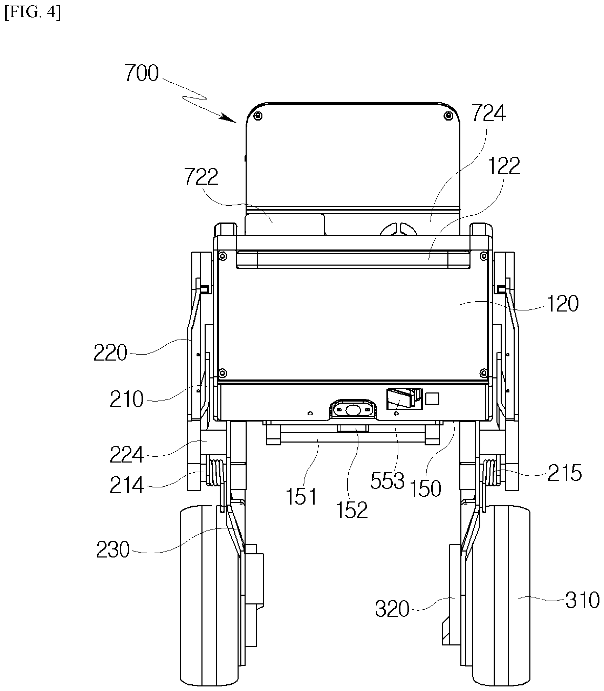

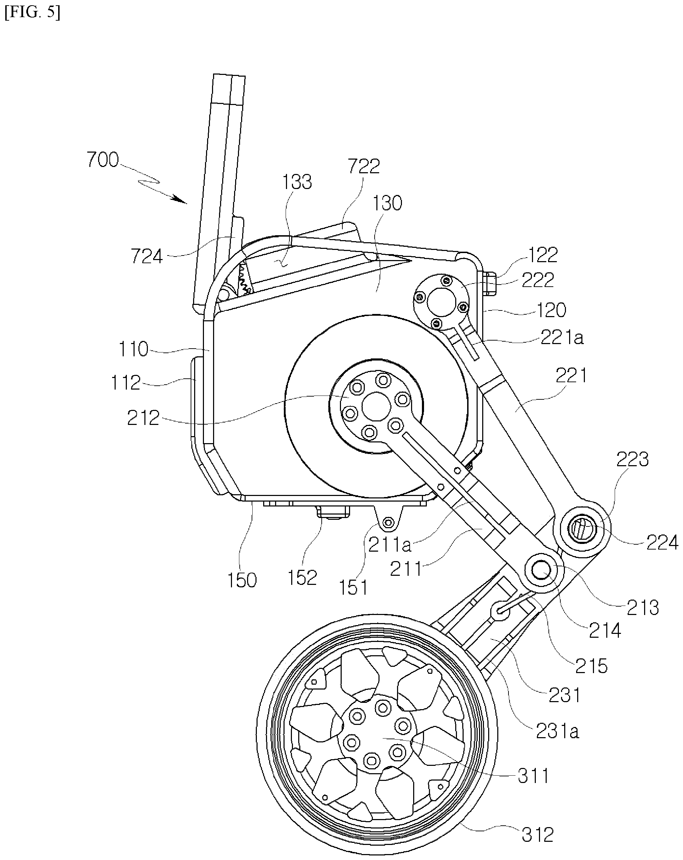

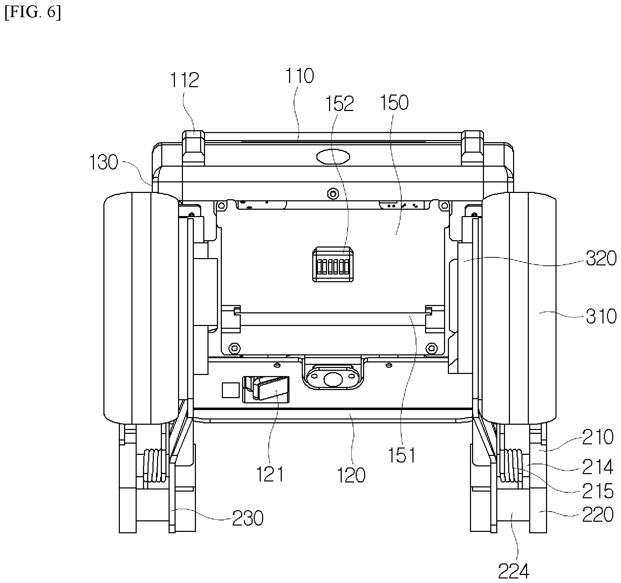

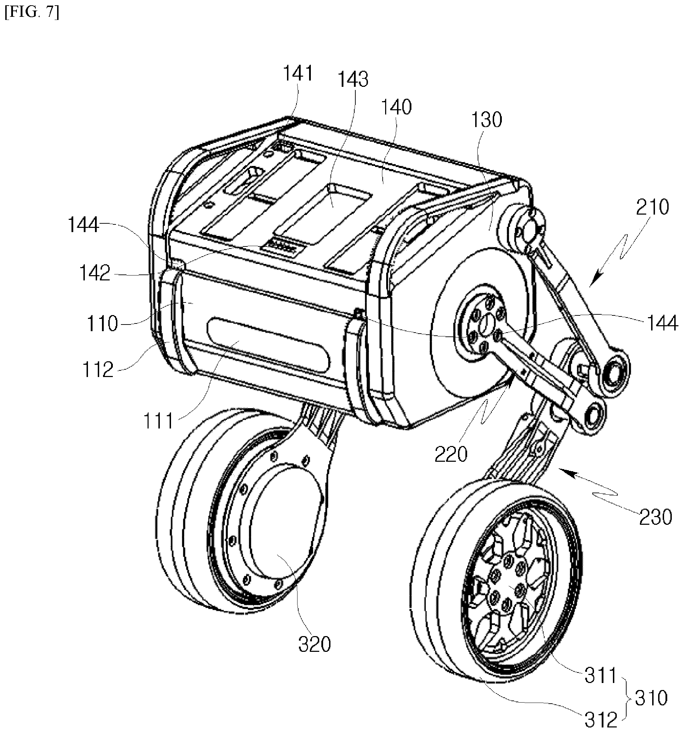

FIG. 1 is a perspective view for describing a robot according to one embodiment of the present disclosure, FIG. 2 is an exploded perspective view of FIG. 1, FIG. 3 is a front view of the robot according to one embodiment of the present disclosure, FIG. 4 is a rear view of the robot according to one embodiment of the present disclosure, FIG. 5 is a side view of the robot according to one embodiment of the present disclosure, FIG. 6 is a bottom view of the robot according to one embodiment of the present disclosure, and FIG. 7 is a view for describing a state in which an upper functional module has been removed from the robot according to one embodiment of the present disclosure.

Referring FIGS. 1 to 7, a robot 1 according to one embodiment of the present disclosure will be described as follows.

The robot 1 according to the embodiment of the present disclosure is placed on a floor to move along a floor surface B. Therefore, the following description will be made by setting a vertical direction based on a state in which the robot 1 is placed on the floor.

In addition, the following description will be made by setting a side at which a body camera 531 to be described below is disposed with respect to a battery 560 as a front. In addition, the following description will be made by setting a direction opposite to the front as a rear with respect to the battery 560. In addition, the following description will be made by setting a direction in which an upper cover 140 is disposed as the top and a direction in which a lower cover 150 is disposed as the bottom with respect to the battery 560.

A "lowest portion" of each component described in the embodiment of the present disclosure may be a portion of each component that is located to be lowest when the robot 1 according to the embodiment of the present disclosure is used by being placed on the floor, or may be a portion closet to the floor.

The robot 1 according to the embodiment of the present disclosure includes a robot body 100, a leg unit 200, a wheel unit 300, a sensor unit 400, a controller 510, the battery 560, an upper functional module 700, and a lower functional module 800. The leg unit 200 is coupled to both side surfaces of the robot body 100, and the wheel unit 300 is coupled to the leg unit 200.

### Robot body

The leg unit 100 of the robot 1 according to one embodiment of the present disclosure will be described with reference to FIGS. 1 to 7 as follows.

The robot body 100 may form an exterior of the robot 1. Components constituting the robot 1 may be coupled to the robot body 100.

For example, the leg unit 200 is coupled to each of frames 130 of both side surfaces of the robot body 100. In addition, a bumper 112 may be coupled to a front cover 110 provided on a front surface of the robot body 100.

In particular, the functional modules 700 and 800 may be detachably coupled to the robot body 100 according to the embodiment of the present disclosure. Here, the functional modules 700 and 800 may include an upper functional module 700 coupled to an upper portion of the robot body 100 and a lower functional module 800 coupled to a space between a pair of wheels 310.

Therefore, the upper functional module 700 may be detachably coupled to an upper cover 140 disposed at an upper side of the robot body 100. The lower functional module 800 may be detachably coupled to a lower cover 150 disposed at a lower side of the robot body 100.

With this configuration, it is possible to perform various functions by coupling the functional modules 700 and 800 to the robot body 100. In addition, a new function may be added to the function in use by replacing the functional modules 700 and 800, or a new function may be added to the function in use by additionally mounting the functional modules 700 and 800.

In the embodiment of the present disclosure, the robot body 100 may be formed in a shape that has a horizontal width (or a diameter) larger than a vertical height. The robot body 100 may assist the robot 1 to have a stable structure and provide a structure that is advantageous in maintaining balance when the robot 1 moves (travels).

Some components constituting the robot 1 may be accommodated inside the robot body 100. For example, an internal space of the robot body 100 may accommodate one or more motors including a suspension motor MS, one or more sensors, and the battery 560.

The robot body 100 includes a front cover 110. The front cover 110 constitutes a front exterior of the robot 1. That is, the front cover 110 may be disposed at the foremost portion of the robot 1 when the robot 1 travels forward.

For example, the front cover 110 of the robot body 100 may be formed in a flat shape. As another example, the front cover 110 may have a plate shape with a curved surface. As still another example, the front cover 110 may have a plate shape bent at a predetermined angle.

The front cover 110 may be provided with a window 111. The window 111 may be made of a material through which light may transmit. For example, the window 111 may be made of a material through which infrared (IR), visible rays, or ultraviolet (UV) rays may transmit.

The front cover 110 includes an outer surface exposed to the outside of the robot 1 and an inner surface disposed on a back surface of the outer surface.

The bumper 112 may be coupled to the outer surface of the front cover 110. That is, the bumper 112 may be disposed in front of the robot body 100. For example, the bumper 112 may be provided at both end portions of the outer surface of the front cover 110, and a pair of bumpers 112 may be disposed in parallel in a vertical direction.

The bumper 112 may be provided to move relatively with respect to the robot body 100. For example, the bumper 112 may be coupled to the robot body 100 to reciprocate in a front-rear direction of the robot body 100.

The bumper 112 may be coupled along a portion of a front edge of the front cover 110. Alternatively, the bumper 112 may be coupled along the entire edge of the front cover 110. With this configuration, when the robot 1 collides with another object or person, the bumper 112 can protect the robot body 100 and components accommodated inside the robot body 100 by absorbing an impact applied to the robot body 100.

The body camera 531 may be disposed behind an inner surface of the front cover 110. Specifically, the body camera 531 may be disposed immediately behind the window 111. With this configuration, the body camera 531 may detect objects or people disposed in front of the robot 1.

Meanwhile, although not shown, the front cover 110 may include an input unit through which a control command is input from a user, a display unit for visually conveying information about an operating state of the robot 1 to the user, etc. For example, the front cover 110 may include a touch screen for visually displaying the operating state of the robot 1 and allowing the control command to be input from the user.

The robot body 100 includes a rear cover 120.

The rear cover 120 constitutes a rear exterior of the robot 1. For example, the rear cover 120 may be formed in a flat plate shape. As another example, the rear cover 120 may have a plate shape with a curved surface.

A manipulation unit 553 for adjusting power of the robot 1 may be disposed on the rear cover 120.

The manipulation unit 553 may be manipulated by the user, and the robot 1 may be turned on or off by manipulating the manipulation unit 553.

The manipulation unit 553 may be provided on the rear cover 120 to pivot in a left-right direction or provided to pivot in the vertical direction according to an embodiment.

For example, when the user pushes one side of the manipulation unit 553 and the manipulation unit 553 pivots to one side, the robot 1 may be turned on. In addition, when the user pushes the other side of the manipulation unit 553 and the manipulation unit 553 pivots to the other side, the robot 1 may be turned off.

A rear bumper 122 may be coupled to an outer surface of the rear cover 120. That is, the rear bumper 122 may be disposed behind the robot body 100. For example, the rear bumper 122 may be provided on the outer surface of the rear cover 120 and may be disposed in the horizontal direction. With this configuration, when the robot 1 collides with another object or person, the bumper 122 can protect the robot body 100 and the components accommodated inside the robot body 100 by absorbing an impact applied to the robot body 100.

The robot body 100 includes a side frame 130.

The side frame 130 constitutes the exterior of both side surfaces of the robot 1. For example, the side frame 130 may be disposed on each of both side surfaces of the robot 1 and configured to face each other. For example, the side frame 130 may be formed in a flat plate shape. As another example, at least a portion of the side frame 130 may be formed in a curved shape.

The side frame 130 is coupled to the front cover 110 and the rear cover 120. The side frame 130 may connect the front cover 110 to the rear cover 120. With this configuration, the robot body 100 may have an internal space surrounded by the front cover 110, the rear cover 120, and the two side frames 130.

The leg unit 200 may be disposed outside the side frame 130. Specifically, a first link 210 and a second link 220 may be rotatably coupled to the outside of the side frame 130.

Generally, in a two-wheeled robot, a support structure is disposed vertically under the robot body to support a load of the robot. However, when the support structure is present vertically under the robot body, there is a limitation in that a space under the robot cannot be used.

To solve this, the robot 1 according to the embodiment of the present disclosure has the leg unit 200 coupled to the side frame 130.

The suspension motor MS may be disposed inside the side frame 130.

Link coupling holes 131 and 132 are formed in the side frame 130. The link coupling holes include the first link coupling hole 131 and the second link coupling hole 132.

The first link coupling hole 131 is formed in a circular hole shape in the side frame 130. At least a portion of the first link 210 may be rotatably accommodated in the first link coupling hole 131. For example, one end portion of the first link 210 may be coupled to a shaft of the suspension motor MS through the first link coupling hole 131.

The second link coupling hole 132 is formed in a circular hole shape in the side frame 130. At least a portion of the second link 220 may be rotatably accommodated in the second link coupling hole 132. For example, the shaft formed at one side of the second link 220 may be rotatably coupled by passing through the second link coupling hole 132.

Meanwhile, the first link coupling hole 131 may be formed to have a larger diameter than the second link coupling hole 132.

The first link coupling hole 131 and the second link coupling hole 132 may be formed at a predetermined interval. For example, the center of the first link coupling hole 131 in a circular hole shape and the center of the second link coupling hole 132 in a circular hole shape may be disposed at the predetermined interval.

The first link coupling hole 131 and the second link coupling hole 132 may be disposed at a predetermined inclination with respect to the ground. For example, in a state in which the robot 1 is placed on the ground, the first link coupling hole 131 may be disposed at a lower side of the side frame 130, and the second link coupling hole 132 may be disposed at an upper rear side of the side frame 130.

With this configuration, the side frame 130 in which the link coupling holes 131 and 132 are formed may function as a kind of link.

Meanwhile, according to an embodiment, a handle hole 133 may be formed in the side frame 130. For example, the handle hole 133 may be formed at an upper front side of the side frame 130. With this configuration, the user may lift the robot body 100 upward by inserting his/her hand into the handle hole 133 and gripping the side frame 130.

The upper cover 140 constitutes an upper exterior of the robot 1. The upper cover 140 is coupled to the front cover 110, the rear cover 120 and the two side frames 130. Therefore, the upper cover 140 may cover an upper side of the internal space surrounded by the front cover 110, the rear cover 120, and the two side frames 130.

In a state in which the robot 1 is placed on the ground, the upper cover 140 may be disposed to be inclined at a predetermined angle with respect to the ground. For example, a front end portion of the upper cover 140 may be disposed closer to the ground than a rear end portion thereof is.

The upper functional module 700 may be coupled to the upper cover 140. The upper functional module 700 may be detachably coupled to an upper side of the upper cover 140.

A hook accommodation groove 141 and a front hook accommodation groove 144 may be formed to be hook-coupled to the upper functional module 700 in the upper cover 140. With this configuration, the upper functional module 700 may be coupled to the robot body 100 by only a user's simply operation of pushing the hook of the upper functional module 700 into the hook accommodation groove 141 and the front hook accommodation groove 144.

The coupling between the upper cover 140 and the upper functional module 700 will be described below together with detailed description of the upper functional module 700.

The lower cover 150 forms a lower exterior of the robot 1. The lower cover 150 is coupled to the front cover 110, the rear cover 120, and the two side frames 130. Therefore, the lower cover 150 may cover a lower side of the internal space surrounded by the front cover 110, the rear cover 120, and the two side frames 130.

The lower functional module 800 may be coupled to the lower cover 150. The lower functional module 800 may be detachably coupled to a lower side of the lower cover 150. Specifically, the lower cover 150 may include a coupling bar 151 to be latch-coupled to the lower functional module 800.

The coupling bar 151 may be formed in a cylindrical shape and disposed in the left-right direction of the robot 1. In addition, a pair of protrusions connected to the coupling bar 151 may be formed to protrude from the lower cover 150.

The lower cover 150 may include a charging terminal 152. The charging terminal 152 may be disposed on a lower surface of the lower cover 150.

In this case, the charging terminal 152 may be disposed at a location facing the charging terminal provided on a robot charging station (not shown). The charging terminal 152 may be electrically connected to a charging terminal provided on the robot charging station (not shown). The robot 1 may receive power from the robot charging station (not shown) through the charging terminal 152. In addition, the power supplied to the charging terminal 152 may be supplied to the battery 560.

Meanwhile, in general, in the two-wheeled robot, the support structure is disposed vertically under the robot body to support the load of the robot. However, when the support structure is present vertically under the robot body, there is a limitation in that a space under the robot cannot be used.

To solve this, the robot 1 according to one embodiment of the present disclosure has the leg unit 200 disposed on both side surfaces of the robot body 100. Therefore, a module coupling space 153 to which the lower functional module 800 is coupled is formed at the lower side of the lower cover 150.

The module coupling space 153 may be formed between the pair of leg units 200. For example, the module coupling space 153 may be a space vertically under the coupling bar 151. That is, the module coupling space 153 may be a space having a predetermined width ΔS in the left-right direction.

Therefore, since the lower functional module 800 is coupled to a space between a lower portion of the robot body 100 and the pair of leg units 200, thereby minimizing the volume of the robot 1 in the state in which the lower functional module 800 is mounted.

Meanwhile, although not shown, according to an embodiment, the robot body 100 may further include an external case. The external case may constitute the overall exterior of the robot body 100. The external case may cover the exteriors of the front cover 110, the rear cover 120, the side frame 130, the upper cover 140, and the lower cover 150. For example, the external case may be formed in an elliptical shape formed to extend in the left-right direction.

### Leg unit

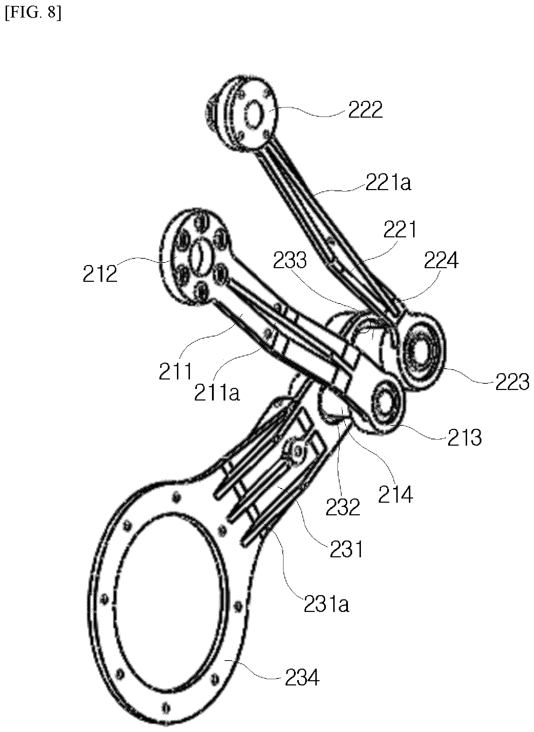

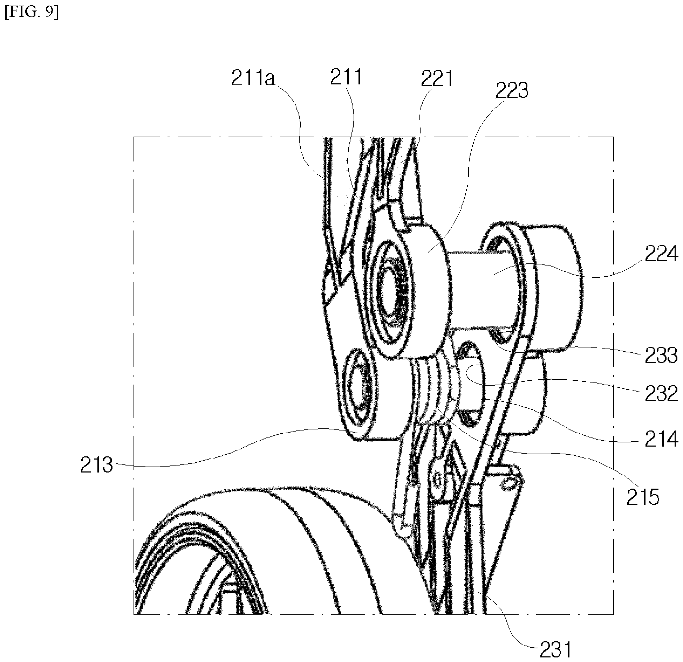

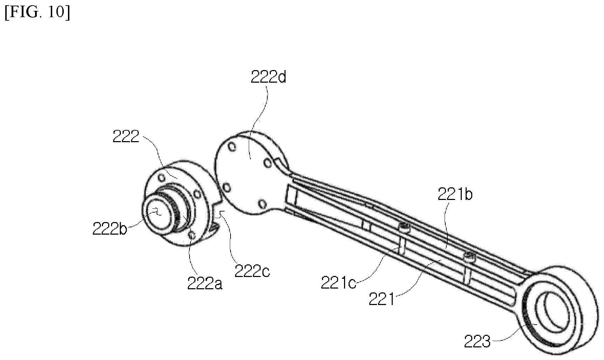

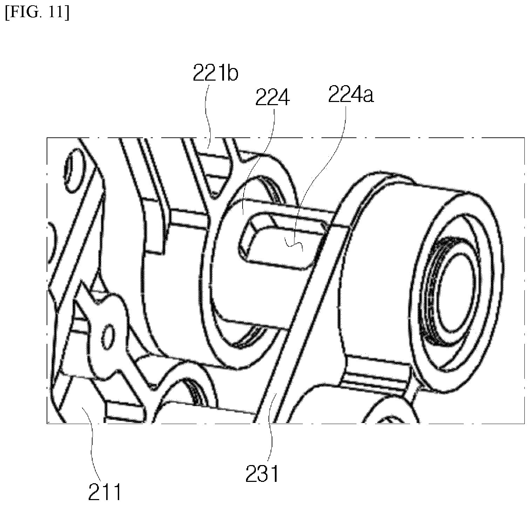

FIG. 8 is a view for describing a leg unit in the robot according to one embodiment of the present disclosure, FIG. 9 is a view for describing a connection relationship of the leg unit in the robot according to one embodiment of the present disclosure, FIG. 10 is a view for describing a second link in the robot according to one embodiment of the present disclosure, and FIG. 11 is a view for describing a structure for hiding an electric wire in the robot according to one embodiment of the present disclosure.

The leg unit 200 of the robot 1 according to one embodiment of the present disclosure will be described with reference to FIGS. 1 to 11 as follows.

The leg unit 200 may be coupled to the robot body 100 to support the robot body 100. For example, a pair of leg units 200 are provided and are each coupled to the side frame 130 of the robot body 100. In this case, at least a portion of the leg unit 200 is disposed closer to the ground than the robot body 100. Therefore, the robot body 100 may travel in the form of standing on the ground by the pair of leg units 200. That is, gravity applied to the robot body 100 may be supported by the leg units 200, and a height of the robot body 100 can be maintained.

In the robot 1 according to one embodiment of the present disclosure, the leg unit 200 is coupled to only both side surfaces of the robot body 100. That is, the leg unit 200 is not coupled to the lower and rear surfaces of the robot body 100.

Therefore, as shown in FIGS. 3 to 18, a space is formed between the lower side of the lower cover 150 and the pair of leg units 200. For example, a space in which a rectangular parallelepiped-shaped lower functional module 800 may be accommodated may be formed between the lower side of the lower cover 150 and the pair of leg units 200.

The leg unit 200 includes the first link 210, the second link 220, and the third link 230. In this case, the first link 210 and the second link 220 are rotatably coupled to the side frame 130 and the third link 230, respectively. That is, the first link 210 and the second link 220 are link-coupled to the side frame 130 and the third link 230, respectively.

The first link 210 is link-coupled to the side surface of the robot body 100. For example, the first link 210 may be link-coupled to the side frame 130.

The first link 210 is connected to the suspension motor MS. For example, the first link 210 may be connected to the shaft of the suspension motor MS directly or through a gear. With this configuration, the first link 210 receives a driving force from the suspension motor MS.

The first link 210 includes a first link body 211, a motor coupling portion 212, and a link coupling portion 213.

The first link body 211 is formed in a frame shape that extends to connect the motor coupling portion 212 to the link coupling portion 213, the motor coupling portion 212 is provided at one side in a longitudinal direction, and the link coupling portion 213 is provided at the other side in the longitudinal direction. In this case, the motor coupling portion 212 may be disposed farther from the ground than the link coupling portion 213.

The first link body 211 may be formed in a shape that is bent at least once. For example, the other side of the first link body 211 provided with the link coupling portion 213 may be disposed farther from the robot body 100 than the one side provided with the motor coupling portion 212. Therefore, a distance between the pair of first link bodies 211 increases from the top to the bottom in the vertical direction. With this configuration, the first link 210 can stably support the robot body 100.

A rib 211a may be formed on the first link body 211. For example, the rib may be formed to protrude from the first link body 211 in the longitudinal direction. In this case, the rib 211a may be formed in an area in which the first link body 211 is bent. With this configuration, the rib 211a can increase durability by reinforcing the first link 210.

The motor coupling portion 212 is formed on one end portion of the first link body 211.

The motor coupling portion 212 is rotatably accommodated in the first link coupling hole 131 of the side frame 130. For example, the motor coupling portion 212 may be formed in a disk shape or a circular plate shape. In this case, a maximum diameter of the motor coupling portion 212 may be equal to or smaller than a maximum diameter of the first link coupling hole 131. Therefore, the motor coupling portion 212 may be connected to the suspension motor MS through the first link coupling hole 131.

The motor coupling portion 212 is connected to the suspension motor MS. For example, the motor coupling portion 212 is fixedly coupled to the shaft of the suspension motor MS. With this configuration, when the suspension motor MS is driven, the motor coupling portion 212 may be rotated in conjunction with the rotation of the shaft of the suspension motor MS.

The link coupling portion 213 is formed on the other end portion of the second link body 211.

The link coupling portion 213 is rotatably coupled to the third link 230. Specifically, the link coupling portion 213 is rotatably coupled to the third link 230 through a first link shaft 214. For example, the link coupling portion 213 may be formed in a disk shape, and the first link shaft 214 may be coupled by passing through the center of the link coupling portion 213. In addition, the first link shaft 214 may be rotatably coupled by passing through the third link 230. With this configuration, the first link 210 and the third link 230 may be connected to rotate relatively.

The first link shaft 214 is provided to connect the first link 210 to the third link 230. For example, the first link shaft 214 may be coupled by passing through the link coupling portion 213 of the first link 210 and/or the third link 230. In this case, the first link shaft 214 may be rotatably coupled to the link coupling portion 213 and/or the third link 230. With this configuration, the first link shaft 214 may be an axis about which the third link 230 rotates.

A gravity compensator 215 compensates for the robot body 100 that moves down vertically due to gravity. That is, the gravity compensator 215 provides a force for supporting the robot body 100.

For example, the gravity compensator 215 may be a torsion spring. The gravity compensator 215 may be wound to surround an outer circumferential surface of the first link shaft 214. In addition, one end portion of the gravity compensator 215 is fixedly coupled by being inserted into the first link 210, and the other end portion of the gravity compensator 215 is fixedly coupled by being inserted into the third link 230.

The gravity compensator 215 applies a force in a direction in which an angle between the first link 210 and the third link 230 increases. For example, both end portions of the gravity compensator 215 contract in advance to apply a restoring force in a direction in which the angle between the first link 210 and the third link 230 increases. Therefore, even when the robot 1 is placed on the ground and gravity is applied to the robot body 100, the angle between the first link 210 and the third link 230 can be maintained within a predetermined angle range.

With this configuration, it is possible to prevent the robot body 100 from moving down toward the ground even when the suspension motor MS is not driven. Therefore, the gravity compensator 215 prevents energy loss due to driving the suspension motor MS and maintains the height of the robot body 100 to a predetermined distance or more from the ground.

The second link 220 is link-coupled to the side surface of the robot body 100. For example, the second link 220 may be link-coupled to the side frame 130. That is, the second link 220 may be coupled to the side frame 130 to which the first link 210 is coupled together.

The second link 220 includes a second link body 221, a frame coupling portion 222, and a link coupling portion 223. In this case, the frame coupling portion 222 may be disposed farther from the ground than the link coupling portion 223.

The second link body 221 is formed in a frame shape that extends to connect the second link body 221 to the link coupling portion 223, the motor coupling portion 212 is provided at one side in a longitudinal direction, and the link coupling portion 223 is provided at the other side in the longitudinal direction.

The second link body 221 may be formed in a shape that is bent at least once. For example, the other side of the second link body 221 provided with the link coupling portion 223 may be disposed farther from the robot body 100 than the one side provided with the frame coupling portion 222. Therefore, a distance between the pair of second link bodies 221 increases from the top to the bottom in the vertical direction. With this configuration, the second link 220 can stably support the robot body 100.

The second link body 221 includes an inner surface facing the robot body 100 and an outer surface facing a direction away from the robot body 100.

A rib 221a may be formed on the second link body 221. For example, the rib 221a may be formed to protrude from the outer surface of the second link body 221 in the longitudinal direction. In this case, the rib 221a may be formed in an area in which the second link body 221 is bent. With this configuration, the rib 221a can increase durability by reinforcing the second link 220.

An electric wire accommodation wall 221b may be formed on the second link body 221. For example, a pair of electric wire accommodation walls 221b may be formed to protrude from the inner surface of the second link body 221 in the longitudinal direction. In this case, the pair of electric wire accommodation walls 221b may be formed in parallel at a predetermined interval. With this configuration, the electric wire may be accommodated in the space surrounded by the second link body 221 and the electric wire accommodation walls 221b. Therefore, it is possible to prevent the electric wire from being exposed to the outside.

In addition, the second link 220 may be provided with an electric wire support pin 221c. The electric wire support pin 221c may pass through the pair of electric wire accommodation walls 221b. The electric wire support pin 221c may be disposed in a direction crossing the pair of electric wire accommodation walls 221b. With this configuration, the electric wire accommodation wall 221b may close a portion of an open area in the space surrounded by the second link body 221 and the electric wire accommodation walls 221b. Therefore, it is possible to prevent the electric wire from coming out of the space surrounded by the second link body 221 and the electric wire accommodation walls 221b.

The frame coupling portion 222 is formed on one end portion of the second link body 221.

The frame coupling portion 222 is rotatably coupled to the second link coupling hole 132 of the side frame 130. For example, the frame coupling portion 222 may be provided with a coupling shaft 222a coupled by passing through the side frame 130.

The coupling shaft 222a may be formed in a cylindrical shape. For example, an outer diameter of the other end portion of the coupling shaft 222a may be larger than an outer diameter of one end portion of the coupling shaft 222a coupled to the side frame 130 in an axial direction (longitudinal direction).

A hollow 222b may be formed in the coupling shaft 222a. The electric wire may pass through the hollow 222b. With this configuration, it is possible to prevent the electric wire through which power is supplied from the battery 560 to a wheel motor MW from being exposed to the outside.

In addition, the electric wire through hole 222c may be formed in the coupling shaft 222a. The electric wire through hole 222c may be formed on an outer circumferential surface of the other end portion of the coupling shaft 222a in the axial direction. With this configuration, in the robot body 100, the electric wire passing through the hollow 222b may pass through the electric wire through hole 222c and may be accommodated in the second link body 221.

The coupling shaft 222a may be coupled to a rotational connection plate 222d. For example, the rotational connection plate 222d may be formed in a disk shape, and a diameter of the rotational connection plate 222d may be formed to be smaller than a diameter of the other end portion of the coupling shaft 222a in the axial direction. Therefore, the rotational connection plate 222d may be coupled by being accommodated in the other end portion of the coupling shaft 222a in the axial direction.

The rotational connection plate 222d may be formed integrally with the second link body 221. An outer end portion of the rotational connection plate 222d in a radial direction may be connected to the second link body 221. With this configuration, the rotational connection plate 222d may couple the second link body 221 to the coupling shaft 222a.

The link coupling portion 223 is formed on the other end portion of the second link body 221.

The link coupling portion 223 is rotatably coupled to the third link 230. Specifically, the link coupling portion 223 is rotatably coupled to the third link 230 through a second link shaft 224. For example, the link coupling portion 223 may be formed in a disk shape, and the second link shaft 224 may be coupled by passing through the center of the link coupling portion 223. In addition, the second link shaft 224 may be rotatably coupled by passing through the third link 230. With this configuration, the second link 220 and the third link 230 may be connected to rotate relatively.

The second link shaft 224 is provided to connect the second link 220 to the third link 230. For example, the second link shaft 224 may be coupled by passing through the link coupling portion 223 of the second link 220 and/or the third link 230. In this case, the second link shaft 224 may be rotatably coupled to the link coupling portion 223 and/or the third link 230. With this configuration, the second link shaft 224 may be an axis about which the third link 230 rotates.

The third link 230 is link-coupled to the first link 210 and the second link 220 and coupled to the wheel unit 300.

The third link 230 includes a third link body 231. The third link body 231 is formed in a frame shape that extends to connect the third link coupling hole 232 to the wheel coupling portion 234, a third link coupling hole 232 and a fourth link coupling hole 233 are formed at one side thereof in the longitudinal direction, and a wheel coupling portion 234 is formed at the other side in the longitudinal direction.

The third link body 231 may be formed in a shape that is bent at least once. For example, a pair of third link bodies 231 have a distance between the other sides at which the wheel coupling portion 234 is formed, which is shorter than a distance between one sides at which the third link coupling hole 232 and the fourth link coupling hole 233 are formed.

At least one rib 231a may be formed to protrude from the third link body 231 in the longitudinal direction. The rib 231a may be formed in a bent area of the third link body 231. With this configuration, the rib may reinforce the third link body 231.

The third link coupling hole 232 is formed in the third link body 231. Specifically, the third link coupling hole 232 is formed at one side of the third link body 231 in the longitudinal direction. The first link shaft 214 may be rotatably coupled by passing through the third link coupling hole 232. For example, the third link coupling hole 232 may be formed in a circular hole shape. With this configuration, the third link 230 may be rotatably connected to the first link 210 through the first link shaft 214.

A hole into which the gravity compensator 215 is coupled may be formed in the third link body 231. For example, the other end portion of the torsion spring may be coupled by being inserted into the hole.

The fourth link coupling hole 233 is formed in the third link body 231. Specifically, the fourth link coupling hole 233 is formed at one side of the third link body 231 in the longitudinal direction. The second link shaft 224 may be rotatably coupled by passing through the fourth link coupling hole 233. For example, the fourth link coupling hole 233 may be formed in a circular hole shape. With this configuration, the third link 230 may be rotatably connected to the second link 220 through the second link shaft 224.

The fourth link coupling hole 233 may be disposed farther from the wheel coupling portion 234 than the third link coupling hole 232.

The third link 230 is coupled to the wheel unit 300. In this case, a wheel housing 320 is coupled to an inner surface (surface facing the robot body 100) of the third link body 231, and the wheel 310 is rotatably coupled to an outer surface (back surface of the inner surface) of the third link body 231.

Meanwhile, the wheel coupling portion 234 is formed on the third link body 231. Specifically, the wheel coupling portion 234 is formed at the other side of the third link body 231 in the longitudinal direction.

For example, the wheel coupling portion 234 may be formed in a circular hole shape. The wheel motor MW may be accommodated in the wheel coupling portion 234.

Meanwhile, in a state in which the robot 1 stands on the ground, the wheel coupling portion 234 may be disposed vertically under the robot body 100. For example, in the state in which the robot 1 stands on the ground, the wheel coupling portion 234 may be disposed vertically under the suspension motor MS.

The suspension motor MS is relatively heavy among the components accommodated in the robot body 100. Therefore, the entire weight of the robot body 100 may be concentrated vertically under the suspension motor MS.

With this configuration, the wheel 310 coupled to the wheel coupling portion 234 can maintain the balance of the robot body 100 by supporting a lower side of the center of gravity of the robot body 100.

### Wheel unit

Referring to FIGS. 1 to 7, the wheel unit 300 may be rotatably coupled to the leg unit 200 and may roll along the ground to move the robot body 100 and the leg unit 200.

The wheel unit 300 includes the wheel 310 that is in contact with the ground and rolls along the ground, and the wheel housing 320 in which the wheel motor MW is accommodated.

The wheel 310 is provided to have a predetermined radius and a predetermined width in the axial direction. As shown in FIG. 3, when viewing the robot 1 from the front, the side frame 130 and the leg unit 200 may be disposed vertically above the wheel 310.

In addition, referring to FIG. 2, when viewing the side surface of the robot 1, the suspension motor MS, the first link coupling hole 131, and the second link coupling hole 132 may be disposed vertically above the wheel 310.

The wheel 310 includes a wheel frame 311 formed in a circular shape. The wheel frame 311 may be formed in a cylindrical shape with an open one side facing the shaft of the wheel motor MW. Therefore, a weight of the wheel frame 311 can be reduced.

However, when the wheel frame 311 is formed in a cylindrical shape, the overall rigidity of the wheel frame 311 can be reduced. In consideration of such a point, the rib (not shown) for reinforcing rigidity may be formed on each of the inner and outer surfaces of the wheel frame 311.

A wheel tire 312 is coupled to an outer circumferential surface of the wheel frame 311. The wheel tire 312 may be formed in an annular shape with a diameter of the wheel tire 312 fitted into the outer circumferential surface of the wheel frame 311.

Grooves of a predetermined pattern may be recessed in the outer circumferential surface of the wheel tire 312 to increase a grip force of the wheel tire 312.

In one embodiment, the wheel tire 312 may be made of an elastic rubber material.

The wheel housing 320 may have a cylindrical shape with an open one side in the axial direction so that the wheel motor MW is accommodated therein. In this case, a closed portion of the wheel housing 320 may be coupled to an inner surface of the third link 230. With this configuration, it is possible to prevent an external foreign substance from flowing into the wheel housing 320.

Meanwhile, the wheel housing 320 may be provided with a sensor for measuring a distance to the ground. For example, the sensor may be a time of flight sensor (ToF sensor).

The wheel 310 is rotatably coupled to the leg unit 200. Specifically, the wheel 310 is rotatably coupled to an outer surface (surface facing the outside of the robot 1) of the third link 230.

The wheel motor MW may provide a driving force to the wheel 310. The wheel motor MW may generate a rotational force by receiving power from the battery 560.

The wheel motor MW may be accommodated in the wheel housing 320. In addition, the wheel motor MW may pass through the wheel coupling portion 234 of the third link 230, and the shaft of the wheel motor MW may be coupled to the wheel frame 311 of the wheel 310. That is, the wheel motor MW may be an in-wheel motor.

With this configuration, when the wheel motor MW is driven, the wheel 310 may roll along the ground while rotating, and the robot 1 may move along the ground.

### Balance of robot by four-bar linkage

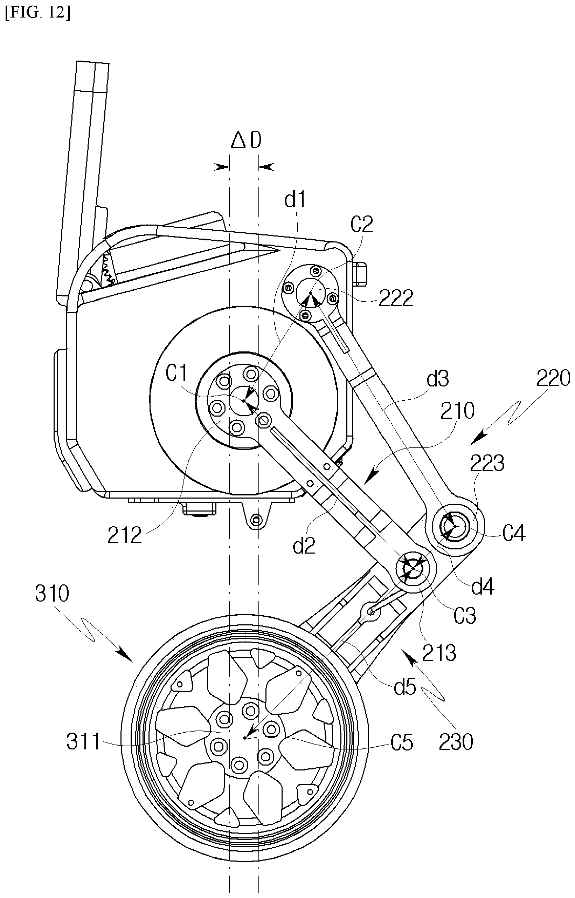

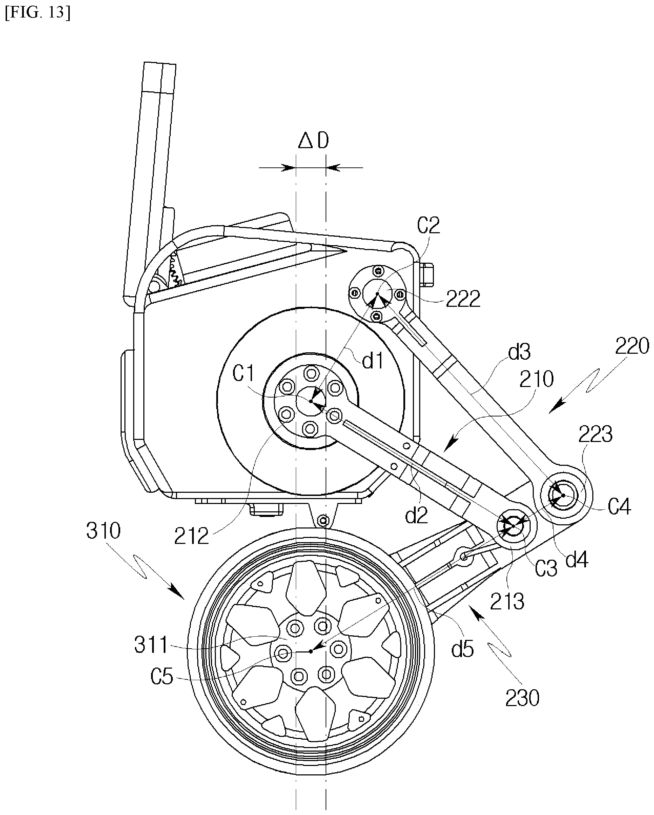

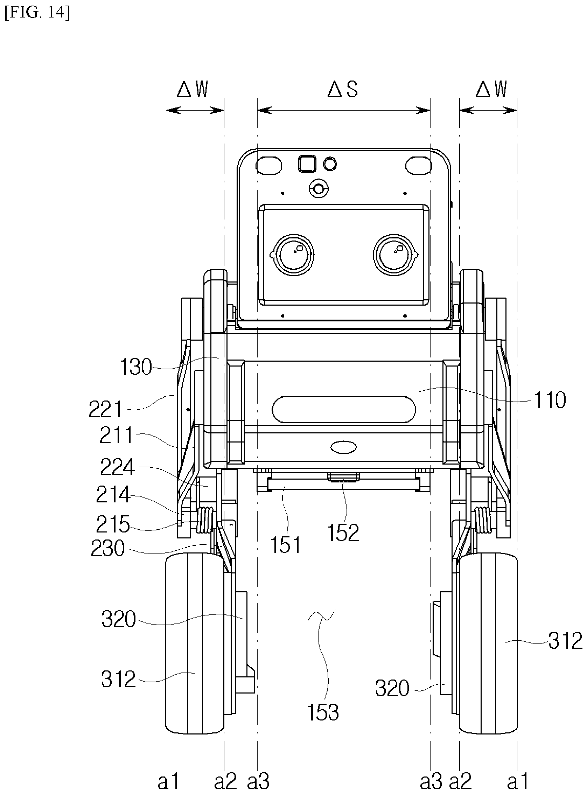

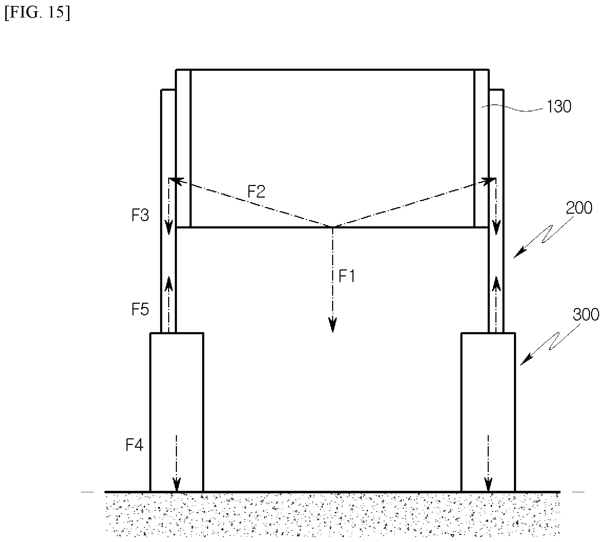

FIGS. 12 and 13 are views for describing a change in location of a wheel according to the movement of the leg unit in the robot according to one embodiment of the present disclosure, FIG. 14 is a view for describing a relationship between the arrangement of the wheel and the arrangement for coupling with a lower functional module in the robot according to one embodiment of the present disclosure, and FIG. 15 shows a schematic view for describing that a load of the robot body is transmitted to wheels in the robot according to one embodiment of the present disclosure.

Referring FIGS. 12 to 14, the balance of the robot 1 according to one embodiment of the present disclosure will be described as follows.

The robot 1 according to the embodiment of the present disclosure may support the robot body 100 through the four-bar linkage structure and maintain the balance of the robot body 100.

The balance of the robot 1 in the front-rear direction according to one embodiment of the present disclosure will be described with reference to FIGS. 12 and 13 as follows.

The leg unit 200 is provided on each of both side surfaces of the robot body 100. Specifically, the first link 210 and the second link 220 are rotatably coupled to the side frames 130 provided at both sides of the robot body 100, and the first link 210 and the second link (220) is link-coupled to the third link 230. That is, the robot 1 supports the robot body 100 through the four-bar linkage composed of the side frame 130, the first link 210, the second link 220, and the third link 230.

In this case, when viewing the side surface of the robot body 100 as shown in FIGS. 12 and 13, the robot body 100 may be disposed vertically above the wheel 310. With this configuration, the wheel 310 can stably support the load of the robot body 100.

In particular, the motor coupling portion 212 may be disposed vertically above the wheel 310. With this configuration, the wheel 310 can stably support the motor coupling portion 21 to which the load of the robot body 100 is intensively transmitted and maintain the balance of the robot 1.

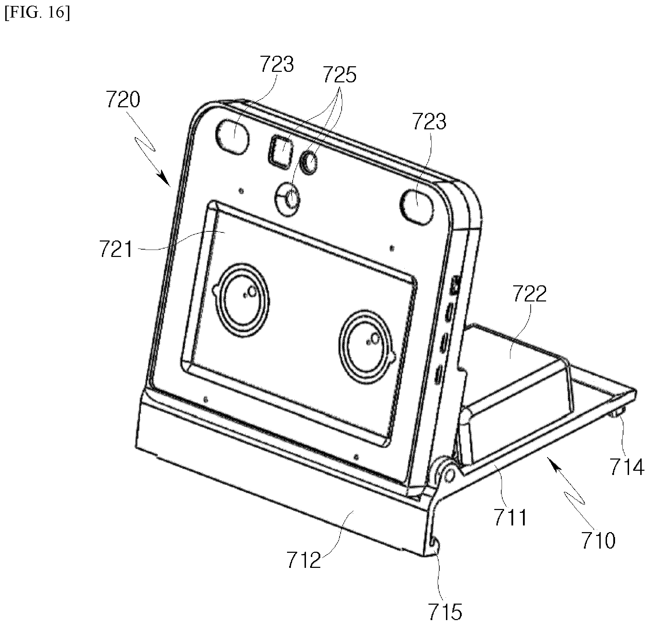

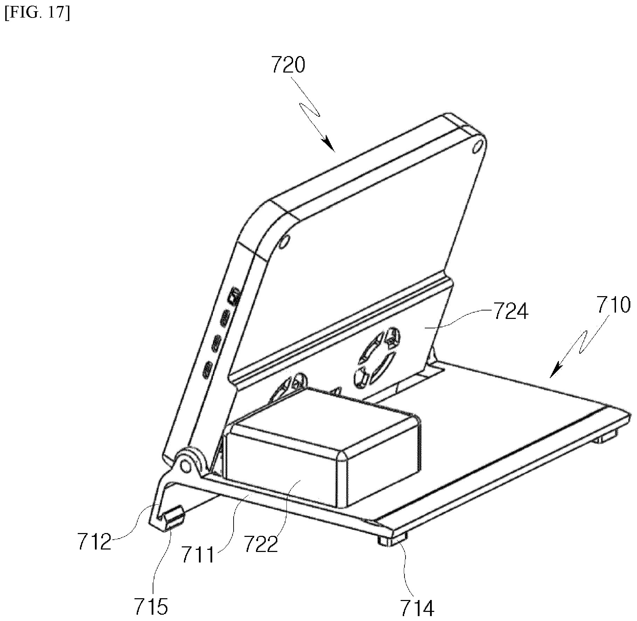

Meanwhile, when viewing the side surface of the robot body 100 as shown in FIGS. 16 and 17, the coupling bar 151 may be disposed vertically above the wheel 310. With this configuration, even in a state in which the lower functional module 800 is coupled to the robot body 100, the entire load of the robot 1 may be concentrated vertically above the wheel 310, and the wheel 310 can stably support the robot 1.

Meanwhile, in the embodiment of the present disclosure, the gravity compensator 215 generates a restoring force in a direction of lifting the robot body 100. Therefore, even in a state in which the suspension motor MS is not driven, the pair of leg units 200 can maintain the state of lifting the robot body 100 to a predetermined height from the ground.

Meanwhile, the robot 1 according to the embodiment of the present disclosure can maintain the balance by lifting any one of the pair of wheels 310 to pass an obstacle or driving the suspension motor MS when the height of the robot body 100 is lowered for charging, etc.

When the suspension motor MS is driven, the link coupling portion 213 moves upward as the first link 210 rotates about the motor coupling portion 212. In addition, the third link 230 is moved by rotating the first link 210. In addition, the second link 220 is rotated by being pushed by the third link 230. As a result, one end portion of the third link 230 may be moved rearward, and the other end portion of the third link 230 may be moved upward.

With this configuration, even when the wheel 310 moves upward and downward, a movement range of the wheel 310 in the front-rear direction may be limited. Therefore, the robot 1 can stably maintain the balance.

Therefore, the robot 1 according to the present disclosure may pass obstacles of various heights using the four-joint link structure.

In the robot 1 according to the embodiment of the present disclosure, a center C1 of the first link coupling hole 131 and a center C2 of the second link coupling hole 132 may be disposed at a predetermined first distance d1. In addition, a center C1 of the motor coupling portion 212 of the first link 210 and a center C3 of the link coupling part 213 of the first link 210 may be disposed at a predetermined second distance d2. In addition, a center C2 of the frame coupling portion 222 of the second link 220 and a center C4 of the link coupling portion 223 of the second link 220 may be disposed at a predetermined third distance d3. In addition, a center C3 of the third link coupling hole 232 of the third link 230 and a center C4 of the fourth link coupling hole 233 of the third link 230 may be disposed at a predetermined fourth distance d4. In addition, the center C3 of the third link coupling hole 232 of the third link 230 and a center C5 of the wheel coupling portion 234 of the third link 230 may be disposed at a predetermined fifth distance d5.

In this case, the first distance d1, the second distance d2, the third distance d3, the fourth distance d4, and the fifth distance d5 may be disposed to have a predetermined length ratio. For example, the first distance d1 may be 0.5 times or more and 0.6 times or less the fifth distance d5. The second distance d2 may be 0.95 times or more and 1.05 times or less the fifth distance d5. The third distance d3 may be 1.1 times or more and 1.2 times or less the fifth distance d5. The fourth distance d4 may be 0.2 times or more and 0.3 times or less the fifth distance d5.

With this configuration, even when the third link 230 is moved by driving the suspension motor MS, a movement distance of the center C5 of the wheel coupling portion 234 in the front-rear direction can be maintained within a predetermined deviation ΔD. For example, even when the third link 230 is moved, the movement distance of the center C5 of the wheel coupling portion 234 in the front-rear direction can be maintained within 2% of the fifth distance d5.

Therefore, while the robot 1 is moving, the center of gravity of the robot body 100 may be disposed vertically above the wheel 310. Therefore, the robot 1 can be prevented from shaking in the front-rear direction while moving and can maintain the balance.

In addition, according to the robot 1 according to the present disclosure, even when the wheels 310 move upward while the robot 1 passes an obstacle, the balance can be maintained without changing locations of the wheels 310 in the front-rear direction.

The balance of the robot 1 in the front-rear direction according to one embodiment of the present disclosure will be described with reference to FIGS. 14 and 15 as follows.

As shown in FIGS. 14 and 15, the robot body 100 is supported by the pair of leg units 200 and the pair of wheel units 300.

The load of the robot body 100 may be transmitted to the wheel 310 through the leg units 200, and the wheel 310 may support the leg units 200 and the robot body 100.

In this case, the pair of leg units 200 may be disposed symmetrically (line symmetrically). In particular, the link-coupled portions of the pair of leg units 200 may be disposed in parallel.

Specifically, the motor coupling portions 212 of the pair of first links 210 may be disposed in parallel. The link coupling portions 213 of the pair of first links 210 may be disposed in parallel. The frame coupling portions 222 of the pair of second links 220 may be disposed in parallel. The link coupling portions 223 of the pair of second links 220 may be disposed in parallel. The wheel coupling portions 234 of the pair of third links 230 may be disposed in parallel.

With this configuration, the module coupling space 153 having a predetermined width ΔS is formed at the lower side of the robot body 100. The module coupling space 153 may be formed in parallel to the pair of leg units 200. In addition, the module coupling space 153 may be formed in parallel to the pair of wheels 310.

At least one motor including the suspension motor MS and the battery 600 may be provided inside the robot body 100, and when the robot 1 is placed on the ground, the entire load of the robot body 100 in a state in which the motor and the battery 600 are accommodated may be applied to the leg units 200.

In particular, since the robot 1 according to one embodiment of the present disclosure is provided with the leg unit 200 at both side surfaces of the robot body 100, the load of the robot body 100 is concentrated on the pair of side frames 130 and the pair of leg units 200.

In this case, as shown in FIG. 14, based on when viewing the front surface of the robot 1 from the front of the robot 1, the side frame 130 and the leg units 200 may all be disposed vertically above the wheel 310.

That is, as shown in FIG. 14, both the side frames 130 and the leg units 200 may all be disposed between a virtual line a1 vertically extending an outer end portion of the wheel 310 in the axial direction and a virtual line a2 vertically extending the inner end portion of the wheel 310 in the axial direction.

Specifically, the side frames 130 may both be disposed between the virtual line a1 vertically extending the outer end portion of the wheel 310 in the axial direction and the virtual line a2 vertically extending the inner end portion of the wheel 310 in the axial direction.

The first link 210 may be disposed between the virtual line a1 vertically extending the outer end portion of the wheel 310 in the axial direction and the virtual line a2 vertically extending the inner end portion of the wheel 310 in the axial direction.

The second link 220 may be disposed between the virtual line a1 vertically extending the outer end portion of the wheel 310 in the axial direction and the virtual line a2 vertically extending the inner end portion of the wheel 310 in the axial direction.

The third link 230 may have at least a portion coupled to the inner end portion of the wheel 310 in the axial direction. The third links 230 may both be disposed in a virtual space vertically extending the wheel unit 300. For example, the third link may be disposed between the virtual line a1 vertically extending the outer end portion of the wheel 310 in the axial direction and a virtual line vertically extending an inner end portion of the wheel housing 320 in the axial direction.

In addition, thicknesses (length of the robot 1 in the left-right direction) of the leg unit 200 and the side frame 130 are smaller than a thickness (length of the robot 1 in the left-right direction, ΔW) of the wheel 310.

With this configuration, the entire load of the robot body 100 applied to the side frames 130 and the leg units 200 can be stably supported by the wheels 310 disposed thereunder in the direction of gravity.

As shown in FIG. 15, the entire load F1 of the robot body 100 may be distributed to a pair of side frames 130 disposed on both side surfaces of the robot body 100.

In this case, since the first link 210 and the second link 220 are coupled to the pair of side frames 130, the entire load F1 of the robot body 100 may be distributed toward a point at which the side frame 130 and the first link 210 are coupled and a point at which the side frame 130 and the second link 220 are coupled (F2).

In addition, the distributed force F2 may be applied toward the ground along the first link 210 and the second link 220 (F3). In addition, the force F3 applied along the first link 210 and the second link 220 may be transmitted along the wheels 310 to press the ground B (F4).

In this case, since a thickness of the wheel 310 is greater than thicknesses of the side frame 130 and the leg unit 200, the force pressing the ground can be stably distributed, and the balance of the robot 1 can be stably maintained.

Meanwhile, the load of the robot body 100 applied along the first link 210 and the second link 220 may be supported by the third link 230 (F5). In addition, the force of pressing the first link 210 due to the load of the robot body 100 may be canceled by the gravity compensator 215, and thus the robot 1 can be stably supported.

Therefore, according to the robot 1 according to the embodiment of the present disclosure, the balance of the robot body 100 can be stably maintained by concentrating the load of the robot body 100 vertically above the pair of wheels 310.

In addition, the leg unit 200 may be pressed vertically downward by the load of the robot body 100, and the application of the load of the robot 1 in the left-right direction can be prevented, thereby preventing the robot 1 from shaking in the left-right direction.

### Upper functional module

The upper functional module 700 is a component that is replaceably coupled to an upper surface of the robot body 100 so that the robot 1 may provide various services to the user.

The upper functional module 700 may include a flat upper plate 710 coupled to the upper surface of the robot body 100 and a functional unit for providing the services to the user.

The functional unit may be coupled to an upper side of the upper plate 710, and components included therein may vary depending on services provided by the upper functional module 700.

When a plurality of upper functional modules 700 each including different functional units are provided, the user may add or change the services provided by the robot 1 according to the present disclosure by replacing the upper functional module 700 as needed.

For example, when the upper functional module 700 according to the first embodiment is coupled to the upper surface of the robot body 100, the robot 1 may provide a pet robot service that expresses emotions and communicates with the user (see FIGS. 16 and 17).

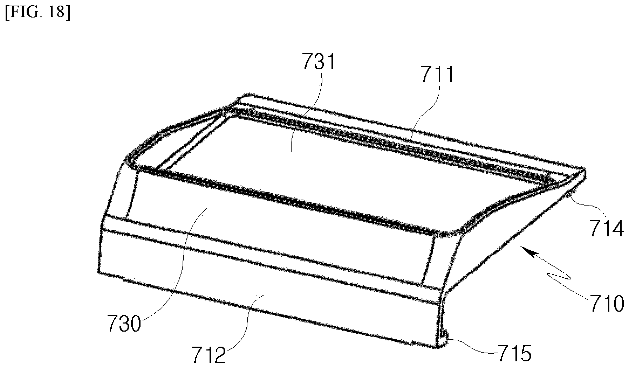

As another example, when the upper functional module 700 according to the second embodiment is coupled to the upper surface of the robot body 100, the robot 1 may provide services for charging the user's mobile phone, transporting objects to required places, and operating the mobile phone according to a voice command (see FIG. 18).

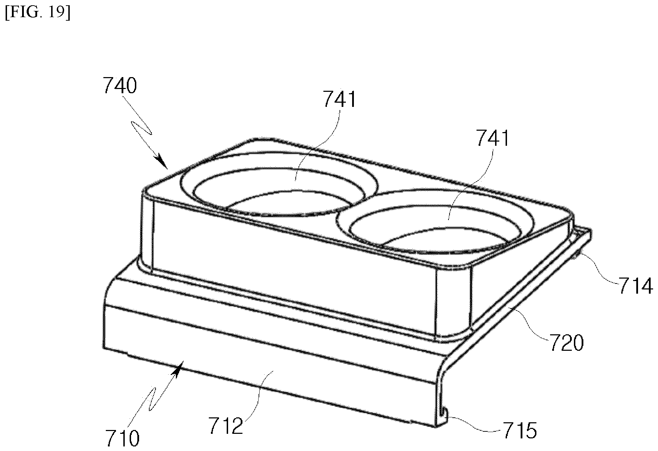

As still another example, when the upper functional module 700 according to the third embodiment is coupled to the upper surface of the robot body 100, the robot 1 may transport drinks and provide a heat or cold insulation service for maintaining temperatures of the drinks (see FIG. 19).

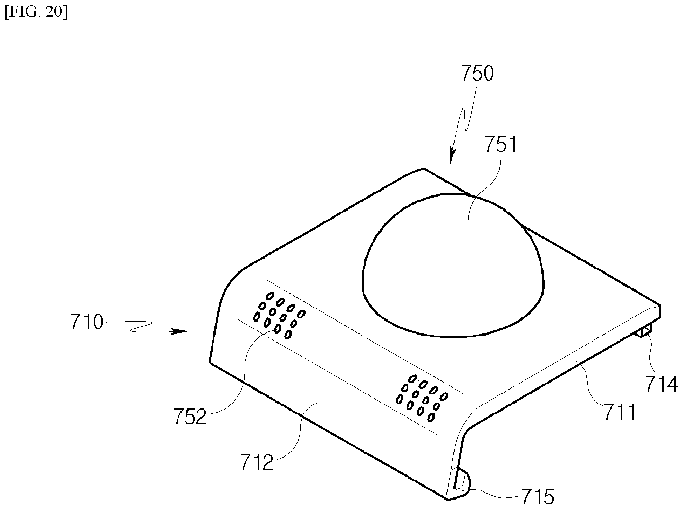

As still another example, when the upper functional module 700 according to the fourth embodiment is coupled to the upper surface of the robot body 100, the robot 1 may provide the mood necessary for a party, etc. through a lighting device and a speaker (see FIG. 20).

Hereinafter, the service provision of the upper functional module 700 of the robot 1 according to each embodiment will be described with reference to each drawing.

FIG. 16 is a perspective view for describing the upper functional module 700 of the robot 1 according to the first embodiment of the present disclosure. FIG. 17 is a view of FIG. 16 viewing the upper functional module 700 at another angle.

According to the first embodiment, the functional unit may be an interaction assembly 720.

The interaction assembly 720 may be coupled to the upper side of the upper plate 710.

The interaction assembly 720 may include a display 721 for expressing emotions of the robot 1 and communicating with the user.

The display may be formed as any one of a light emitting diode (LED), a liquid crystal display (LCD), a plasma display panel, and an organic light emitting diode (OLED).

Faces and expressions may be displayed on the display 721.

The robot 1 may display facial shapes such as eyes, nose, and mouth on the display 721 to make the user feel that the robot expresses emotions.

The robot 1 may depict facial expressions by displaying a preset image on the display 721, thereby allowing the user to recognize that the robot expresses emotions.

For example, when the user returns home, the robot 1 may display a smiling face on the display 721 to show happiness. The robot 1 may detect the user's return home through a microphone 726 or an upper plate camera 725, which will be described below.

As another example, when the robot 1 detects a cliff and escapes the danger of falling, the robot 1 may display a surprised face and surprised eye expression on the display 721.

As still another example, when the user calls the robot 1, the robot 1 may stare at the user and display a curious facial expression on the display 721. The robot 1 may be set to detect and respond when the user calls with a specific pronunciation.

As still another example, when the robot 1 cannot understand the user's command, the robot 1 may display a curious facial expression together with a symbol such as '?' on the display 721.

As still another example, when the user continuously orders services to the robot 1, the robot 1 may display a difficult facial expression together with a picture representing sweat.

As still another example, when the user does not give a command to the robot 1 for a preset time or longer, the robot 1 may display a sleeping facial expression.

Information to be provided to the user may be displayed on the display 721.

The display 721 may be a touch screen capable of recognizing a user input.

The robot 1 may detect the user's command using the microphone 726 to be described below.

In addition to the examples above, the robot 1 may express various emotions on the display 721, and expressions that may be displayed can be improved or added through software update, etc.

In this way, the robot 1 may provide a pet robot service for displaying emotions and communicating with the user and provide emotional stability to the user.

The interaction assembly 720 may further include an upper plate motor 722 for adjusting an angle of the display 721.

The upper plate motor 722 may be disposed behind the display 721.

The upper plate motor 722 may provide a driving force so that the display 721 of the interaction assembly 720 may rotate.

More specifically, a final output stage of a shaft or gear of the upper plate motor 722 may be connected to the display 721. The display 721 may be rotated according to the rotation of the upper plate motor 722.

The display 721 may be rotated to face the user (particularly, a face) in cooperation with the upper plate camera 725 to be described below. The robot 1 can maximize the effect of communication between the user and the robot 1 by adjusting the display 721 to face an appropriate direction, such as the user's face, through the upper plate motor 722.

The interaction assembly 720 may include an upper plate motor cover for protecting the upper plate motor 722 from being exposed to the outside. As shown in FIGS. 16 and 17, the upper plate motor 722 may be protected by the upper plate motor cover in a rectangular parallelepiped shape.

The interaction assembly 720 may include an upper plate motor sensor 727.

The upper plate motor sensor 727 may measure an angle at which the display 721 of the interaction assembly 720 is rotated. For example, the upper plate motor sensor 727 may be a potentiometer for measuring a rotation angle.

The upper plate motor sensor 727 may be connected to the final output stage of the shaft or gear of the upper plate motor 722 and disposed behind the display together with the upper plate motor 722.

The interaction assembly 720 may further include a speaker 723.

As described above, the robot 1 may visually display emotions by displaying facial expressions on the display 721 and also display emotions through a voice output of the speaker 723.

For example, a laughing sound, a surprised sound, etc. may be output in response to the facial expression displayed on the display 721.

The robot 1 responds to the user's call through the voice output of the speaker 723 and provides emotional stability by audibly communicating with the user. Therefore, it is possible to maximize the communication effect with the robot 1 in combination of the audio and visual functions of the display 721 and the speaker 723 compared to a case where the robot 1 visually communicates with the user using only the display 721.

The interaction assembly 720 may further include a heat dissipation module 724.

The heat dissipation module 724 may dissipate heat generated from the display 721 to the outside of the robot 1, thereby preventing the malfunction, damage to, or failure of the display 721, which may occur due to overheating.

The heat dissipation module 724 may include one or more heat sinks (not shown) formed in the form of a plate that directly transfers the heat of the display, one or more heat dissipation fans for discharging heat from the heat sink by flowing air, a heat dissipation fan cover for protecting the heat dissipation fan, and an air discharge hole which is formed in the heat dissipation fan cover and through which hot air discharged by the heat dissipation fan is discharged to the outside.

The heat sink may be formed in various shapes, but for example, may be formed in a rectangular flat plate shape.

The heat dissipation fan is provided adjacent to the heat sink to generate wind toward the air discharge hole.

The air discharge hole is preferably disposed at a location facing the heat dissipation fan to immediately discharge the wind generated by the heat dissipation fan.

The heat of the display absorbed by the heat sink is discharged through the air discharge hole by the heat sink.

The heat dissipation fan and the air discharge hole are preferably disposed at a location that is not covered by the components of the present invention, which will be described below.

The interaction assembly 720 may further include the upper plate camera 725.

The upper plate camera 725 is a component for recognizing the user's location and/or the user's face.

The upper plate camera 725 may be disposed above the display 721.

The upper plate camera 725 may be disposed between the speakers 723.

The upper plate camera 725 may capture a forward image of the display 721 and recognize the user's location. To this end, the upper plate camera 725 may include an RGB module and a depth module.

The depth module may acquire depth information of the image. For example, the depth information may be obtained in a manner of acquiring moving time information by measuring a retardation or phase shift of a modulated optical signal for all pixels of the captured image.

The RGB module may acquire color images (images). Edge characteristics, color distribution, frequency characteristics or wavelet transform, etc. may be extracted from the color images.

The robot 1 may acquire distance information about an object to be recognized through the depth information from the forward image captured by the upper plate camera 725 and recognize whether the user is present ahead and/or the user's location by calculating boundary characteristics extracted from color images, etc. together.

The display 721 of the robot 1 may be operated in a preset manner according to the user's location or location information of the user's face acquired by the upper plate camera 725.

Specifically, the upper plate camera 725 may specify the user and/or the location of the user's face, and the robot 1 may operate the upper plate motor 722 to allow the display 721 to face the user's face and allow the user to recognize that the user communicates with the robot by displaying the facial expression, etc., thereby maximizing the effect of providing the emotional stability.

The interaction assembly 720 may include one or more microphones 726 for receiving the user's voice signal.

The microphone 726 is a component for recognizing the user's voice and may be provided in plural. The robot 1 may identify the user's location by the voice signal received by the microphone 726 and respond to the user's call.

The microphone 726 may be disposed in the interaction assembly 720. The microphone 726 may be disposed adjacent to the display 721. Preferably, a total of four microphones 726 may be disposed with two microphones each disposed above and under the display 721.

A voice signal received by the microphone 726 may be used to track the user's location. In this case, a known sound source tracking algorithm may be applied. For example, the sound source tracking algorithm may be a three-point measurement method (triangulation method) using a time difference in which a plurality of microphones 726 receive voice signals. The principle is that a location of the voice source is calculated using a location of each microphone 726 and a speed of a sound wave.

Meanwhile, when the microphone 726 cooperates with the upper plate camera 725, the robot 1 may implement a function of finding the user's location even when the user calls the robot 1 from a distance.

FIG. 18 is a view for describing the upper functional module 700 of the robot 1 according to the second embodiment of the present disclosure.

According to the second embodiment, the functional unit may be a carrier assembly 730.

The carrier assembly 730 may be coupled to the upper side of the upper plate 710.

The carrier assembly 730 may be provided with a storage stand 731 for storing objects. Specifically, the storage stand 731 may have an open upper side and have a space formed therein.

The robot 1 may transport objects accommodated in the space inside the storage stand 731.

The robot 1 may move according to the user's voice command and transport the objects stored in the storage stand 731 to required locations.

Specifically, the robot 1 may transport the object by moving according to the user's command to move to a specific location at home after the user places the object on the storage stand 731.

The robot 1 may move according to a preset algorithm and transport the objects stored in the storage stand 731 to required locations.

Specifically, when detecting a weight of a predetermined size or more on the storage stand 731, the robot 1 may recognize that an object has been placed thereon and move to a specific location, and when the weight is removed, the robot 1 may continuously deliver the object to the specific location in a manner of returning to an original location (continuously deliver drinks, foods, etc. from a kitchen to a dining table).

A pressure sensor (not shown) provided with a load cell, etc. may be disposed on a lower surface of the storage stand 731 to detect a weight of an object.

An inner lower surface of the storage stand 731 may be formed as a planar surface, and at least a portion of a side surface thereof may be formed as a flat plate to stably support the transported object.

An anti-slip pad (not shown) may be disposed on the lower surface of the storage stand 731 to prevent stored objects from slipping. The anti-slip pad may be made of a material with strong friction, such as silicon with excellent slip prevention or polyurethane (PU) that is mainly made of artificial leather, but is not limited thereto.

The anti-slip pad may have a plurality of protrusions made of a material with strong friction, such as silicon or polyurethane (PU) that is mainly made of artificial leather, thereby further maximizing a frictional force.

A wireless charging device (not shown) for charging a terminal such as a user's mobile phone may be disposed on the lower surface of the storage stand 731. The terminal, such as the user's mobile phone, may be seated on the lower surface of the storage stand 731 and charged in a wireless manner. A power transmitter (not shown) for transmitting power in a wireless manner is provided on the lower surface of the storage stand 731.

A wireless power transmission and reception method is not limited, and for example, a magnetic induction method, a magnetic resonance method, a microwave method, etc. are possible. When the wireless power method is a magnetic induction method or a magnetic resonance method, the power transmitter may be a transmission coil, and when the wireless power method is a microwave method, the power transmitter may be a transmission antenna.

When the carrier assembly 730 is used in the robot 1 of the present disclosure, devices such as mobile phones that require wireless charging may be charged through the storage stand 731, and thus there is no need to use a separate charging device, thereby providing convenience to the user.

A groove (not shown) for accommodating a mobile phone may be formed in the lower surface of the storage stand 731.

The groove formed in the lower surface of the storage stand 731 functions to more stably accommodate the mobile phone by preventing the same from slipping together with the above-described anti-slip pad.

A light emitting portion (not shown) may be disposed outside the carrier assembly 730 so that the user may visually check the wireless charging amount of the mobile phone accommodated inside the storage stand 731.

For example, the light emitting portion (not shown) may be disposed on a front surface of the carrier assembly 730 to emit red when charging and blue when fully charged so that the user may visually check a charging state of the mobile phone.

A short-range communication module (not shown) or a long-distance communication module (not shown) may be provided on the lower surface of the storage stand 731 to communicate with the stored mobile phone.

The short-distance communication may be, for example, Bluetooth communication, near field communication (NFC), etc.

The long-distance communication may be, for example, Wireless LAN (WLAN), Digital Living Network Alliance (DLNA), Wireless Broadband (Wibro), World Interoperability for Microwave Access (WiMAX), Global System for Mobile communication (GSM), Code Division Multi Access (CMDA), CDMA2000, Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, Radio Frequency (RF), or Long Range (LoRa).

The robot 1 may transmit and receive information by communicating with the stored mobile phone through the short-range communication module or the long-distance communication module disposed on the lower surface of the storage stand 731.

The storage stand 731 may be provided with a display (not shown), a camera (not shown), a microphone (not shown), or a speaker (not shown).

Description of the display (not shown), the camera (not shown), the microphone (not shown), or the speaker (not shown) that may be provided on the storage stand 731 uses the description of the display 721, the upper plate camera 725, the microphone 726, and the speaker 723.

The robot 1 may play sound through the speaker based on information received from the mobile phone stored in the storage stand 731 so that the user may listen to the same.

The robot 1 may detect the user's location using the camera and the microphone in the manner described in the first embodiment, move near the user, display videos on the display based on the information received from the mobile phone, and play sound through the speaker.

For example, when a call is made to the mobile phone stored in the storage stand 731, the robot 1 moves near the user and allows the user to make a voice or video call without directly operating the mobile phone.

For example, the robot 1 may play videos and/or voices that the mobile phone may play according to the user's instruction so that the user may listen to music or watch the video without directly operating the mobile phone.

FIG. 19 is a view for describing the upper functional module 700 of the robot 1 according to the third embodiment of the present disclosure.

According to the third embodiment, the functional unit may be a cup holder assembly 740.

The cup holder assembly 740 may be coupled to the upper side of the upper plate 710.

The cup holder assembly 740 may include the same configuration as the storage stand 731 included in the carrier assembly 730 according to the second embodiment.

The cup holder assembly 740 may include a circular cup holder 741 that accommodates a drink container and has an accommodation space formed at a predetermined depth to prevent the drink container from falling over.

The cup holder 741 may be formed inside the storage stand 731.

The cup holder 741 may be formed to accommodate drinks in various known shapes.

For example, the cup holder 741 may have a predetermined depth, have a circular flat bottom surface, and have curved side surfaces corresponding to the circle of the bottom surface, and have a space for accommodating the drink container formed concavely.

The cup holder 741 may be provided with a heating wire (not shown) on an inner circumferential surface thereof to transfer heat to the stored drink container.

The cup holder 741 may be provided with a temperature sensor (not shown) for measuring a temperature of the stored drink container to determine whether to operate the heating wire.

A heat-insulating member (not shown) may be disposed on an inner circumferential surface of the cup holder 741 to preserve a temperature of the stored drink container.

A pressure sensor (not shown) for detecting whether drinks are stored may be disposed on the lower surface of the cup holder 741.

An anti-slip pad may be disposed on the lower surface of the storage stand 741 to prevent the accommodated drink container from slipping. The anti-slip pad may be made of a material with strong friction, such as silicon with excellent slip prevention or polyurethane (PU) that is mainly made of artificial leather, but is not limited thereto.

The anti-slip pad may have a plurality of protrusions made of a material with strong friction, such as silicon or polyurethane (PU) that is mainly made of artificial leather, thereby further maximizing a frictional force.

In the robot 1 according to the present disclosure, when the cup holder assembly 740 is coupled, the robot 1 may move to a location at which the drink container is required, and since a cooling or warm state is preserved through the heating wire and/or the heat-insulating member, temperatures of drinks can be maintained optimally even without using a separate heating/cooling device, thereby providing convenience to the user.

FIG. 20 is a view for describing the upper functional module 700 of the robot 1 according to the fourth embodiment of the present disclosure.

According to the fourth embodiment, the functional unit may be a mirror ball assembly 750.

The mirror ball assembly 750 may be coupled to the upper side of the upper plate 710.

A lighting device 751 for emitting light may be disposed in the mirror ball assembly 750.

The lighting device 751 may include a plurality of light sources.

For example, the lighting device 751 including the plurality of light sources may be formed in a spherical shape and provided to provide multicolor lightings in various directions.

The mirror ball assembly 730 may be provided with a lighting motor (not shown) for providing power for rotating the lighting device 751 vertically or horizontally to control an operation of the lighting device 751.

The mirror ball assembly 730 may be provided with a wireless communication module (not shown) for communicating with the user's terminal and the speaker 752 for providing sound.

The wireless communication module (not shown) for communicating with the user's terminal in a wireless manner functions to receive sound sources provided from the terminal so that the speaker 752 outputs the corresponding sound source.

For example, the wireless communication module (not shown) may include a wireless communication module such as a Bluetooth module, a Wi-Fi communication module, or an NFC communication module and preferably include a Bluetooth module.

Through the wireless communication module, the speaker 752 of the mirror ball assembly 730 of the robot 1 according to the present disclosure may output sound sources provided from an external terminal.

When the mirror ball assembly 750 is used in the robot 1 according to the present disclosure, the mirror ball assembly 750 may be connected to the user's terminal to not only play the sound source through the speaker 752 but also control the operation of the lighting device 751 according to the sound source and may control the operation of the lighting device 751 according to the user's movement information to encourage the mood at event venues, various parties and clubs, etc.

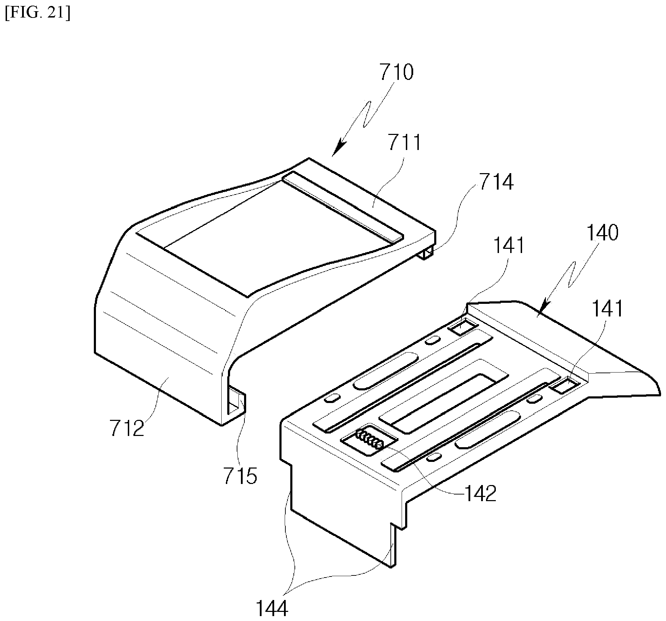

FIG. 21 is a view for describing that the upper surface of the robot 1 according to the fourth embodiment of the present disclosure is coupled to the upper functional module 700.

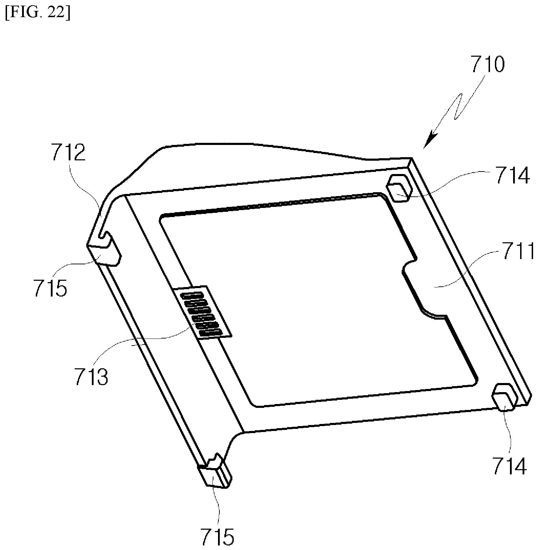

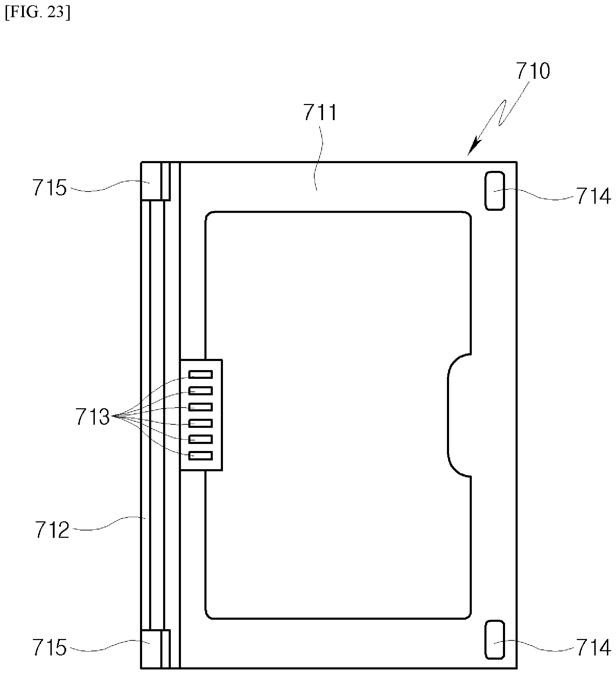

FIGS. 22 and 23 are views for describing a lower structure of the upper functional module 700 of the robot 1 according to the embodiment of the present disclosure.

For convenience, the upper functional module 700 shown in FIGS. 21 to 23 has the functional unit formed in the form of the carrier assembly 730 according to the second embodiment. However, since a method of coupling the robot 1 to the upper functional module 700, which will be described below, is independent of the configuration of the functional unit, the method may be applied to the first to fourth embodiments and may also be applied to other embodiments.

That is, a coupling structure of an upper plate body 711, a front coupling portion 712, a connection terminal, a rear hook 714, a front hook 715, etc., which will be described below, is a common component that is applied even when the functional unit is formed as any of the interaction assembly 720, the carrier assembly 730, the cup holder assembly 740, and the mirror ball assembly 750.

Since the common coupling structure is applied to the upper functional module 700 regardless of services provided by the functional units, one robot 1 may provide various services.

The user may add or change the services provided by the robot 1 as needed by replacing the upper functional module 700 currently coupled to the robot 1 with the upper functional module 700 provided with another functional unit.

The upper cover 140 constitutes the upper exterior of the robot 1.

The upper functional module 700 may be replaceably coupled to the upper side of the upper plate cover 140, which constitutes the upper exterior of the robot 1.

The upper functional module 700 may include the upper plate 710 directly coupled to the upper side of the robot body 100.

The functional unit may be disposed on the upper side of the upper plate 710.

The upper plate 710 may include the flat upper plate body 711 hook-connected to the upper plate cover 140.

The hook accommodation groove 141 and the front hook accommodation groove 144 may be formed to be hook-coupled to the upper functional module 700 in the upper cover 140.

The upper plate 710 may include the flat front coupling portion 712 formed to extend downward from a front end of the upper plate body 711 and hook-coupled to the front surface of the robot body 100.

The upper plate 710 may further include the rear hook 714 formed to protrude from a lower surface of the upper plate body 711 and coupled to the hook accommodation groove 141 of the upper cover 140.

The upper plate 710 may further include the front hook 715 formed to protrude from the front coupling portion 712 and coupled to the front hook accommodation groove 144 of the upper cover 140.

With this configuration, the upper functional module 700 may be coupled to the robot body 100 by only a user's simple operation of pushing the rear hook 714 of the upper functional module 700 into the hook accommodation groove 141 and pushing the front hook 715 into the front hook accommodation groove 144.

The upper plate cover 140 may include a switch or lever (not shown) for releasing the above-described hook coupling by applying a force to the hook accommodation groove 141 and/or the front hook accommodation groove 144. The user may manipulate the switch or the lever to separate the rear hook 714 from the hook accommodation groove 141 and separate the front hook 715 from the front hook accommodation groove 144, thereby easily separating the upper functional module 700 from the upper cover 140.

The upper plate 710 may further include a connection terminal 713 disposed on the lower surface of the upper plate body 711. The connection terminal 713 may include a power terminal and/or a signal terminal.

The robot body 100 may supply power to the upper functional module 700. Specifically, the upper plate cover 140 may be provided with a terminal through which power is supplied to a power terminal among the connection terminals 713 of the upper plate 710.

In addition, the robot body 100 may transmit and receive signals to and from the upper functional module 700. Specifically, the upper cover 140 may be provided with a terminal through which signals may be transmitted and received to and from a signal terminal among the connection terminals 713 of the upper plate 710.

Meanwhile, in an embodiment of the present disclosure, the terminal through which power is supplied to the power terminal of the connection terminals 713 and the terminal through which signals are transmitted and received to and from the signal terminal of the connection terminals 713 may be disposed together on the upper cover 140. For example, the upper cover 140 may include a pogo pin 142 including two power pins and four signal pins.

At least one guide groove 143 may be formed in the upper cover 140. Alower surface of the upper functional module 700 may be coupled to the guide groove 143. With this configuration, the guide groove 143 may guide a coupling location of the upper functional module 700.

As described above, the hook accommodation groove 141 to be coupled to the upper functional module 700 may be formed in the upper cover 140 of the robot body 100 (see FIG. 7).

When the upper functional module 700 is coupled to the upper cover, the controller 510 may be provided to receive signals from the signal terminal of the connection terminals 713, determine which service the functional unit of the upper functional module 700 provides, and perform necessary control accordingly.

As specifically described above, the robot 1 according to the present disclosure may include the upper functional module 700, and a plurality of upper functional modules 700 may be provided so that each may provide a different service, and thus the user may receive another service by changing the upper functional module 700, various functions can be used by only one robot 1, thereby improving user experience, and there is no need to purchase a plurality of robots according to applications, thereby reducing cost.

### Lower functional module

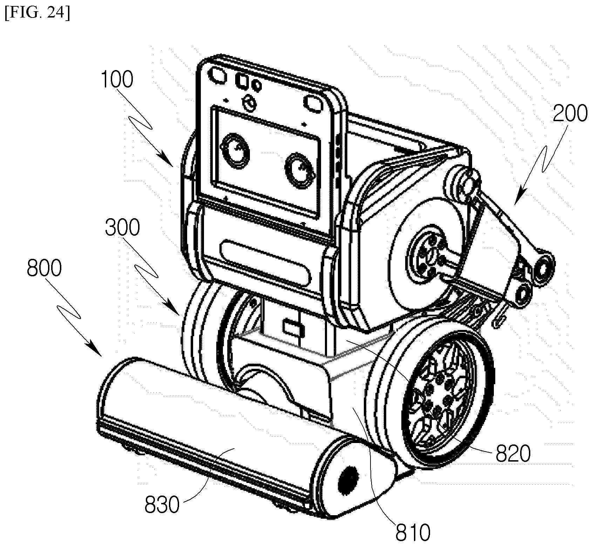

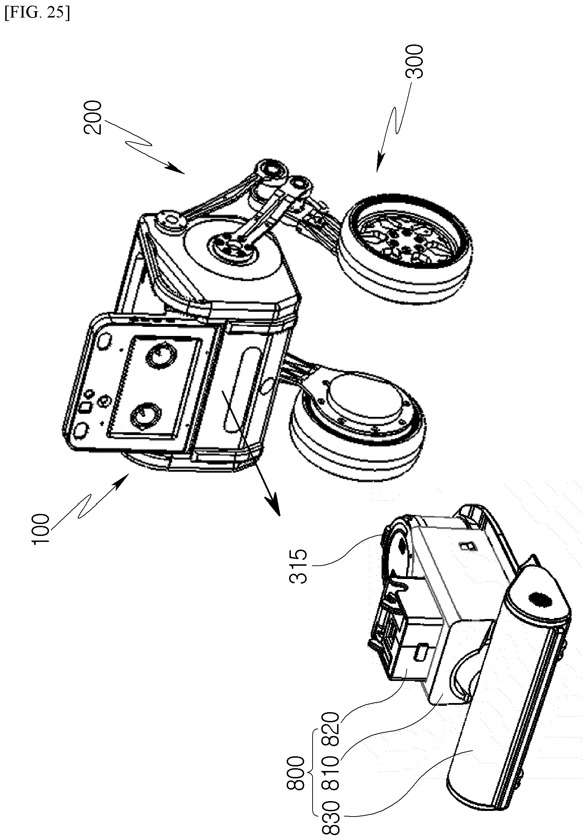

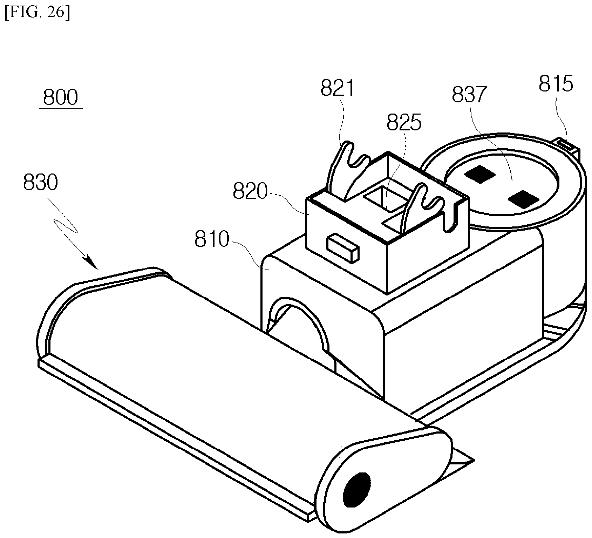

FIG. 24 is a view for describing a state in which a robot according to another embodiment of the present disclosure is coupled to a lower functional module, FIG. 25 is a view for describing a state in which the robot according to another embodiment of the present disclosure approaches the lower functional module to be coupled thereto, and FIG. 26 is a view for describing the lower functional module of the robot according to another embodiment of the present disclosure.

Referring to FIGS. 24 to 26, the robot 1 may include the lower functional module 800. The lower functional module 800 is a component coupled to the robot body 100 to provide various functions to the robot 1.

The lower functional module 800 is detachably coupled to the robot body 100. As an example, the lower functional module 800 may include a battery (not shown), a suction nozzle 830, and a dust bin 837. With this configuration, when the lower functional module 800 is coupled to the robot body 100, the robot 1 may perform dry cleaning.

As another example, the lower functional module 800 may include a mop that rotates about a rotational axis and a water container for storing water supplied to the mop. With this configuration, when the lower functional module 800 is coupled to the robot body 100, the robot 1 may perform wet cleaning.

As another example, the lower functional module 800 may include an arm and a gripper. With this configuration, when the lower functional module 800 is coupled to the robot body 100, the gripper may grip a mobile phone or a large object and transport the same to another location.

To avoid repeated description, the following description will be made based on the lower functional module 800 having a dry cleaning function, but the present disclosure is not limited thereto and may also be applied to the lower functional module 800 having other functions.

Meanwhile, the lower functional module 800 includes a robot body fastening unit 820 coupled to the robot body 100. The robot body fastening unit 820 includes a coupling hook 821 and a corresponding terminal 825.

The robot body fastening unit 820 may be disposed above a body 810 of the lower functional module 800.

The lower functional module 800 is coupled to a lower surface of the robot body 100. Specifically, the coupling bar 151 and the charging terminal 152 to be coupled to the lower functional module 800 are disposed on the lower cover 150 of the robot body 100.

The coupling bar 151 of the lower cover 150 is caught on the coupling hook 821 of the lower functional module 800, and thus the lower functional module 800 is physically coupled to the robot body 100.

The charging terminal 152 of the lower cover 150 is coupled to a corresponding terminal 825 of the lower functional module 800, and thus the lower functional module 800 is electrically connected to the robot body 100.

In a state in which the lower functional module 800 is coupled to the robot body 100, the lower functional module 800 is disposed between a pair of leg units. That is, in the state in which the lower functional module 800 is coupled to the robot body 100, the lower functional module 800 is disposed between a pair of wheels 310.

The robot body 100 may move from the rear to the front of the lower functional module 800 and approach the lower functional module 800.

Here, the rear of the lower functional module 800 may be a direction in which the lamp 815 is disposed with respect to the corresponding terminal 825. In addition, the front of the lower functional module 800 may be a direction opposite to the above rear.

The lamp 815 may indicate the location of the lower functional module 800 through light emission. For example, the lamp 815 may be an infrared (IR) light emitting diode (LED).

The robot body 100 may be moved so that a front surface of the robot body 100 passes the ramp 815 and is disposed above the lower functional module 800.

Then, when the charging terminal 152 of the lower cover 150 of the robot body 100 and the corresponding terminal 825 of the lower functional module 800 are disposed to overlap vertically, the robot body 100 may move downward. The charging terminal 152 is in contact with the corresponding terminal 825 so that the robot body 100 may be electrically connected to the lower functional module 800. The coupling hook 821 is caught on the coupling bar 151 so that the robot body 100 may be physically coupled to the lower functional module 800.

The lower functional module 800 is disposed between the pair of wheels 310 when coupled to the robot body 100. Specifically, the lower functional module 800 is disposed in the module coupling space 153 formed between the pair of leg units. With this configuration it is possible to minimize the overall volume of the robot 1 in a state in which the lower functional module 800 is coupled to the robot 1.

As shown in FIG. 13, when viewed from the left, a virtual vertical line extending upward from a rotation center C5 of the wheel 310 may be disposed between the coupling bar 151 and the charging terminal 152.

In this configuration, when the lower functional module 800 is coupled to the robot body 100, the overall center of gravity of the robot 1 is lowered, and as an area of the robot 1 in contact with the ground is increased, the robot 1 can stably maintain balance.

### Control configuration

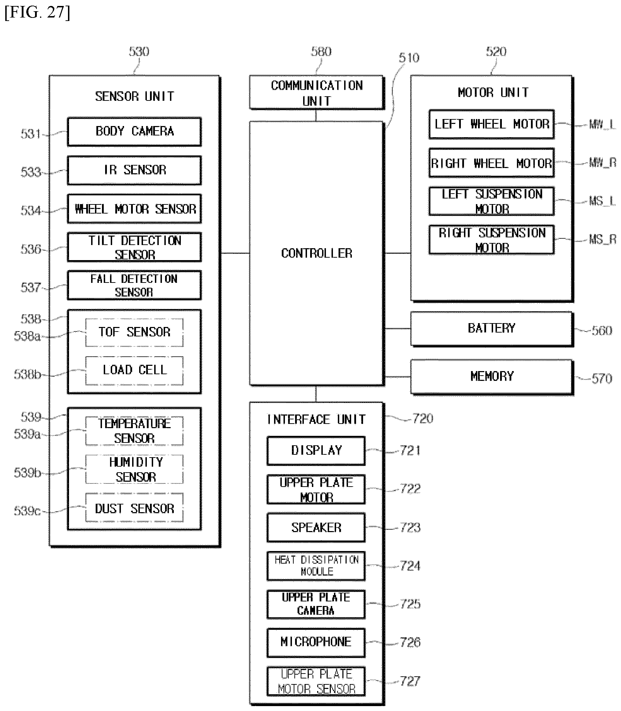

FIG. 27 is a block diagram for describing a control configuration of the robot according to one embodiment of the present disclosure.

Referring to FIG. 27, the robot 1 according to the embodiment of the present disclosure may include the controller 510, a motor unit 520, a sensor unit 530, a battery 560, a memory 570, a communication unit 580, and the replaceable upper functional module 700.

Since components shown in the block diagram of FIG. 27 are not essential in implementing the robot 1, the robot 1 described herein may have a larger or fewer number of components than the components listed above.

First, the controller 510 may control the overall operation of the robot 1. The controller 510 may control the robot 1 to perform various functions according to setting information stored in the memory 570 to be described below.

The controller 510 may be disposed on the robot body 100. More specifically, the controller 510 may be provided by being mounted on a printed circuit board (PCB) disposed between the left wheel 310 and the right wheel 310.

The controller 510 may include all types of devices capable of processing data, such as a processor. Here, "processor" may be, for example, a data processing device built into hardware, which has a physically structured circuit to perform a function expressed by code or commands included in a program. As an example of the data processing device built into hardware, processing devices such as a microprocessor, a central processing unit (CPU), a processor core, a multiprocessor, an application-specific integrated circuit (ASIC), and a field programmable gate array (FPGA) may be included, but the scope of the present disclosure is limited thereto.

The controller 510 may receive information about an external environment of the robot 1 from at least one component of the sensor unit 530 to be described below. In this case, the information about the external environment may be, for example, information such as a temperature, humidity, and amount of dust in an interior where the robot 1 travels. Alternatively, the information may be, for example, cliff information. Alternatively, the information may be, for example, interior map information. Of course, the information about the external environment is not limited to the above examples.

The controller 510 may receive information about a current state of the robot 1 from at least one component of the sensor unit 530 to be described below. In this case, the current state may be, for example, tilt information of the robot body 100. Alternatively, the information may be, for example, information about a separation state between the wheel 310 and the ground. Alternatively, the information may be, for example, location information of the wheel motor MW. Alternatively, the information may be, for example, location information of the suspension motor MS. Of course, information about the current state of the robot 1 is not limited to the above examples.

The controller 510 may transmit a driving control command to at least one of components of the motor unit 520 to be described below. For example, the rotation of the wheel motor MW may be controlled for the traveling of the robot 1. Alternatively, for example, the rotation of the wheel motor MW may be controlled to maintain the horizontal attitude of the robot 1. Alternatively, for example, the rotation of the suspension motor MS may be controlled to maintain the horizontal attitude of the robot 1. Alternatively, for example, the rotation of the upper plate motor 722 may be controlled to adjust an angle of the upper functional module of the robot 1.

The controller 510 may receive a user's command through at least one of components of the interface unit 550 to be described below. For example, the command may be a command for turning on/off the robot 1. Alternatively, for example, the command may be a command for manually controlling various functions of the robot 1.

The controller 510 may output information related to the robot 1 through at least one of the components of the interface unit 550 to be described below. For example, the output information may be visual information. Alternatively, for example, the output information may be auditory information.

The motor unit 520 may include at least one motor and provide a driving force to a component connected to each motor.

The motor unit 520 may include the wheel motor MW for providing a driving force to the left and right wheels 310. More specifically, the motor unit 520 may include a left wheel motor MW_L for transmitting a driving force to the left wheel 310 and a right wheel motor MW_R for transmitting a driving force to the right wheel 310.

The wheel motors MW may be disposed in the wheel units 300, respectively. More specifically, the wheel motor MW may be accommodated in the wheel housing 320. The wheel motor MW may be accommodated in the wheel coupling portion 234.

The wheel motor MW is connected to the wheel 310. More specifically, a final output stage of a shaft or gear of the left wheel motor MW_L is connected to the left wheel 310. A final output stage of a shaft or gear of the right wheel motor MW_R is connected to the right wheel 310. Each of the left and right wheel motors MW rotates by being driven according to the control command of the controller 510, and the robot 1 travels along the ground due to the rotation of the wheel 310 according to the rotation of the wheel motor MW.

The motor unit 520 may include the suspension motor MS for providing a driving force to the left and right leg units 200. More specifically, the motor unit 520 may include a left suspension motor MS_L for transmitting a driving force to the left leg unit 200 and a right suspension motor MS_R for transmitting a driving force to the right leg unit 200.

The suspension motor MS may be disposed on the robot body 100. More specifically, the suspension motor MS may be disposed inside each of the side frames 130.

The suspension motor MS is connected to the first link 210. More specifically, a final output stage of a shaft or gear of the left suspension motor MS_L is connected to the left first link 210. A final output stage of a shaft or gear of the right suspension motor MS_R is connected to the right first link 210. Each of the left and right suspension motors MS rotates by being driven according to the control command of the controller 510, and as the first link 210 rotates according to the rotation of the suspension motor MS and the third link 230 connected to the first link 210 rotates, as a result, the wheel 310 connected to the third link 230 moves upward or downward.

Therefore, the robot 1 may lift or lower the wheel 310 and maintain a horizontal attitude when climbing an obstacle or traveling along a curved ground.

The sensor unit 530 may include at least one sensor, and each sensor may measure or detect information about an external environment of the robot 1 and/or information about a current state of the robot 1.

The sensor unit 530 may include the body camera 531.

The body camera 531 may be the above-described mapping camera. The body camera 531 is provided to map an interior in which the robot 1 travels.

To this end, the body camera 531 may be disposed at the front of the robot body 100. More specifically, the body camera 531 may be disposed behind the inner surface of the front cover 110. The body camera 531 may be disposed behind the window 111.

The body camera 531 may photograph the interior while traveling to perform simultaneous localization and mapping (SLAM). The controller 510 may implement the SLAM based on information about the surrounding environment photographed by the body camera 531 and information about the current location of the robot 1.

Meanwhile, a method in which the robot 1 according to the embodiment of the present disclosure implements the SLAM may be a method implemented using only the body camera 531, but is not limited thereto. For example, the robot 1 may implement the SLAM further using an additional sensor. The additional sensor may be, for example, a laser distance sensor (LDS).

The sensor unit 530 may include the upper plate camera 725.

The sensor unit 530 may include an IR sensor 533 for detecting infrared rays.

The IR sensor 533 may be an IR camera for detecting infrared rays.

The IR sensor 533 may be disposed on the robot body 100. More specifically, the IR sensor 533 may be disposed behind the inner surface of the front cover 110. The IR sensor 533 may be disposed behind the window 111. The IR sensor 533 may be disposed in a left-right direction or vertical direction from the first camera 532.

The robot may approach the module by allowing the IR sensor 533 to detect infrared rays emitted by an IR LED provided in a specific module. For example, the module may be a charging station for charging the robot 1. For example, the module may be a lower functional module detachably provided on the lower cover 150 of the robot 1.

The controller 510 may control the IR sensor 533 to start detecting the IR LED when a charging state of the robot 1 is a preset level or less. The controller 510 may control the IR sensor 533 to start detecting the IR LED when a command to find a specific module is received from a user.

The sensor unit 530 may include a wheel motor sensor 534.

The wheel motor sensor 534 may measure the location of the wheel motor MW. For example, the wheel motor sensor 534 may be an encoder. As is well known, the encoder may detect the location of the motor and also detect a rotational speed of the motor.

The wheel motor sensor 534 may be disposed on each of the left and right wheel motors MW. More specifically, the wheel motor sensor 534 may be connected to the final output end of the shaft or gear of the wheel motor MW and accommodated inside the wheel housing 320 together with the wheel motor MW.

The sensor unit 530 may include a tilt detection sensor 536.

The tilt detection sensor 536 may measure a tilt angle of the robot body 100.

The tilt detection sensor 536 may be, for example, a three-axis acceleration sensor. The acceleration sensor is a sensor for detecting a gravitational acceleration of an object in a stationary state. Since the gravitational acceleration varies depending on a tilt angle of the object, the tilt angle is obtained by measuring the gravitational acceleration. However, there is a disadvantage in that a correct value cannot be obtained in a moving acceleration state rather than a stationary state.

The tilt detection sensor 536 may be, for example, a three-axis gyro sensor. The gyro sensor is a sensor for measuring an angular velocity. A tilt angle is obtained by integrating the angular velocity over the entire time. However, continuous errors occur in the angular velocity measured by the gyro sensor due to noise and other reasons, and due to these errors, an error in an integral value accumulatively occurs over time.

As a result, when a long time elapses in a stationary standby state, the tilt of the robot 1 may be accurately measured by the acceleration sensor, but an error is caused by the gyro sensor. While traveling, an accurate tilt value of the robot 1 may be measured using the gyro sensor, but a correct value cannot be obtained using the acceleration sensor.

Preferably, the tilt detection sensor 536 may be an inertial measurement unit (IMU) sensor. As is well known, the IMU sensor is a sensor in which a three-axis acceleration sensor, a three-axis gyro sensor, and a geomagnetic sensor are embedded together and is also referred to as an inertial measurement sensor. The disadvantages of the above-described acceleration sensor and gyro sensor may be compensated using the IMU sensor.

Hereinafter, in the present specification, an embodiment in which the IMU sensor is provided as the tilt detection sensor 536 will be described.

The IMU sensor may be disposed on the robot body 100. More specifically, the IMU sensor may be disposed adjacent to the controller 510. The IMU sensor may be provided by being mounted on a PCB inside the robot body 100. To increase the measurement accuracy of the tilt angle and direction, the IMU sensor is preferably disposed close to a central area of the robot body 100.

The IMU sensor may measure at least one of the three-axis acceleration, the three-axis angular velocity, and the three-axis geomagnetic data of the robot body 100 and transmit the same to the controller 510.

The controller 510 may calculate the tilted direction and angle of the robot body 100 using at least one of the acceleration, angular velocity, and geomagnetic data received from the IMU sensor. Based on the same, the controller 510 may perform control of maintaining the horizontal attitude of the robot body 100 to be described below.

The sensor unit 530 may include a fall prevention sensor 537 for detecting a cliff.

The fall prevention sensor 537 may be configured to detect a distance to the ground in front of the robot 1 along which it travels. The fall prevention sensor 537 may be configured in various ways within a range in which a relative distance between a point at which the fall prevention sensor 537 is formed and the ground may be detected.

For example, the fall prevention sensor 537 may include a light emitting unit for emitting light and a light receiving unit for receiving reflected light. The fall prevention sensor 537 may be configured as an infrared sensor. The fall prevention sensor 537 may be referred to as a cliff sensor.

The fall prevention sensor 537 may be disposed on the robot body 100. More specifically, the fall prevention sensor 537 may be disposed inside the front cover 110 of the robot body 100. Preferably, the fall prevention sensor 537 may be disposed inside a downward slope provided on the front cover 110. Therefore, the fall prevention sensor 537 may radiate light toward a front floor surface of the robot 1. That is, the fall prevention sensor 537 disposed inside the front slope may detect in advance whether a cliff is present in front of the robot 1 in a proceeding direction.

The light emitting unit of the fall prevention sensor 537 may radiate light obliquely toward the front floor surface. The light receiving unit of the fall prevention sensor 537 may receive light incident by being reflected from the floor surface. A distance between the front ground and the fall prevention sensor 537 may be measured based on a difference between a radiation time point and a reception time point of light.

When the distance measured by the fall prevention sensor 537 exceeds a predetermined value or exceeds a predetermined range, there may be a case where the front ground is suddenly lowered. With this principle, a cliff may be detected.

When the cliff is detected ahead, the controller 510 may control the wheel motor MW so that the robot 1 travels while avoiding the detected cliff. In this case, control of the wheel motor MW may be stop control. Alternatively, control of the wheel motor MW may be change control of a rotation direction.

The fall prevention sensor 537 may be additionally disposed inside the rear cover 120 of the robot body 100. Preferably, the fall prevention sensor 537 may be disposed inside a downward slope provided on the rear cover 120. Therefore, the fall prevention sensor 537 may radiate light toward a rear floor surface of the robot 1. That is, the fall prevention sensor 537 disposed inside the rear slope may detect in advance whether a cliff is present behind the robot in a proceeding direction.

The sensor unit 530 may include a contact detection sensor 538.

The contact detection sensor 538 may detect whether the wheel 310 has been in contact with the ground.

The contact detection sensor 538 may include a time of flight (TOF) sensor 538a for measuring a separation distance between the wheel 310 of the robot 1 and the ground. The TOF sensor 538a may be a three-dimensional (3D) camera to which a TOF technology is applied. As is well known, the TOF technology is a technology of measuring a distance to an object based on a round-trip flight time in which light radiated toward the object is reflected and returned.

The TOF sensor 538a may be disposed on the wheel unit 300. For example, the contact detection sensor 538 may be disposed on each of the left and right wheel housings 320. Whether the wheel 310 is in contact with the ground may be determined through the distance to the ground measured by the TOF sensor 538a. When the distance measured by the TOF sensor 538a is less than a preset distance (or less than the lower limit of a preset distance range), the wheel 310 is in a state of being in contact with the ground. When the distance measured by the TOF sensor 538a is the preset distance or more (or the upper limit or more of the preset distance range), the wheel 310 is in a state of being spaced from the ground.

The contact detection sensor 538 may include a load cell 538b that measures a magnitude of a force applied to some components of the robot 1.

As is well known, when the force is applied to the load cell 538b, a resistance value of a strain gauge provided on the surface changes. In this case, the magnitude of the force applied to the load cell 538b may be measured by changing the resistance value.

The load cell 538b may be disposed on the leg unit 200. Preferably, the load cell 538b may be disposed on each of the left and right third link bodies 231. While the wheel 310 is in a state of being in contact with the floor, the third link 230 is deformed by applying a normal force from the ground. A measured value of the load cell 538b is shown as a value different from an initial value depending on the deformation of the third link 230. Therefore, it may be determined whether the wheel 310 is in a state of being in contact with the ground.

The sensor unit 530 may include an environmental sensor 539.

The environmental sensor 539 may be configured to measure various environmental states outside the robot 1, that is, at home in which the robot 1 travels. The environmental sensor 539 may include at least one of a temperature sensor 539a, a humidity sensor 539b, and a dust sensor 539c.

The environmental sensor 539 may be disposed on the robot body 100. More specifically, the environmental sensor 539 may be disposed behind the robot body 100. As a possible embodiment, information measured by the environmental sensor 539 may be visually displayed on a display unit 554.

The battery 560 is configured to supply power to other components constituting the robot 1.

The battery 560 may be disposed on the robot body 100. More specifically, the battery 560 may be disposed at the rear side of the robot body 100. The battery 560 may be disposed behind the suspension motor MS.

The battery 560 may be charged by an external power source, and to this end, a charging terminal 152 for charging the battery 560 may be provided at one side of the robot body 100 or on the battery 560. As in the embodiment of the present disclosure, the charging terminal 152 may be disposed on the lower cover 150 of the robot body 100. Therefore, the robot 1 may be easily coupled to the charging station in a manner of approaching the charging station and seating the charging terminal 152 on the corresponding terminal of the charging station from the top.

The memory 570 is a component for storing various pieces of data for driving and operating the robot 1.

The memory 570 may store an application program and various pieces of data for autonomous driving of the robot 1. The memory 570 may also store pieces of data sensed by the sensor unit 530 and setting information for various settings selected or input by the user.

The memory 570 may include magnetic storage media or flash storage media, but the scope of the present disclosure is not limited thereto. The memory 570 may include an internal memory and/or an external memory and include volatile memories such as DRAMs, SRAMs, or SDRAMs, non-volatile memories such as one time programmable ROMs (OTPROMs), PROMs, EPROMs, EEPROMs, mask ROMs, flash ROMs, NAND flash memories, or NOR flash memories, flash drives such as SSD, compact flash (CF) cards, SD cards, Micro-SD cards, Mini-SD cards, XD cards, or memory sticks, or storage devices such as HDDs.

The memory 570 may be included in the controller 510 or provided as a separate component.

The communication unit 580 may be provided to transmit signals between internal components of the robot 1. The communication unit 580 may support, for example, controller area network (CAN) communication. The signals may be, for example, control commands transmitted from the controller 510 to another component.

The communication unit 580 may support wireless communication with other devices present outside the robot 1. A short-range communication module or a long-distance communication module may be provided as a wireless communication module for supporting wireless communication.

The short-distance communication may be, for example, Bluetooth communication, near field communication (NFC), etc.

The long-distance communication may be, for example, Wireless LAN (WLAN), Digital Living Network Alliance (DLNA), Wireless Broadband (Wibro), World Interoperability for Microwave Access (WiMAX), Global System for Mobile communication (GSM), Code Division Multi Access (CMDA), CDMA2000, Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, Radio Frequency (RF), or Long Range (LoRa).

The controller 510 may control the components of the upper functional module 700.

The controller 510 may control the display 721 of the upper functional module 700.

The controller 510 may control the display 721 so that information such as operating time information of the robot 1 and power information of the battery 560 may be displayed on the display 721.

The controller 510 may control the display 721 to display the shape of the face, such as eyes, nose, and mouth, displayed on the display 721.

The upper functional module 700 may include the upper plate motor 722 for adjusting an angle of the display 721. The upper plate motor 722 may be a servo motor. The servo motor is a well-known motor used where rotation angle control is required and has a limited operating range but has an advantage in that accurate position control is possible.

The upper plate motor 722 may be rotated by being driven according to a control command of the controller 510, and the display 721 may be rotated according to the rotation of the upper plate motor 722.

The upper functional module 700 may include the upper plate motor sensor 727.

The upper plate motor sensor 727 may measure an angle at which the display 721 of the interaction assembly 720 is rotated. For example, the upper plate motor sensor 727 may be a potentiometer for measuring a rotation angle.

The controller 510 may detect the user's location according to the voice signal received by the microphone 726 of the upper functional module 700.

The controller 510 may control the speaker 552 included in the upper functional module 700.

The speaker 552 may transmit information about the robot 1 as sound. The source of the sound transmitted by the speaker 552 may be sound data previously stored in the robot 1. For example, the pre-stored sound data may be voice data of the robot 1. For example, the pre-stored sound data may be a notification sound that guides the state of the robot 1.

Although the present disclosure has been described in detail through specific embodiments, this is intended to specifically describe the present disclosure, and it is apparent that the present disclosure is not limited thereto, and the present disclosure can be modified or improved by those skilled in the art without departing from the technical spirit of the present disclosure.

All simple modifications or changes of the present disclosure fall within the scope of the present disclosure, and the specific scope of the present disclosure will be made clear by the appended claims.

## Claims

1. A robot comprising:
a robot body in which a motor and a battery are accommodated;
a leg unit coupled to each of both side surfaces of the robot body;
a wheel unit rotatably coupled to the leg unit and including a wheel rolling along a ground; and
an upper functional module replaceably coupled to an upper side of the robot body.
wherein the upper functional module includes:
a flat upper plate coupled to an upper surface of the robot body; and
a functional unit coupled to an upper side of the upper plate to provide a service to a user, and
when the upper functional module is replaced, the service provided to the user through the functional unit is changed.

2. The robot of claim 1, wherein the upper plate includes:
a flat upper plate body hook-coupled to the upper surface of the robot body; and
a front coupling portion extending downward from a front end of the upper plate body and hook-coupled to a front upper side of the robot body.

3. The robot of claim 1, wherein the functional unit includes a display configured to display a preset facial expression image.

4. The robot of claim 3, wherein the functional unit further includes an upper plate camera configured to recognize a user's location or a location of the user's face, and
the display is operated in a preset manner according to location information recognized by the upper plate camera.

5. The robot of claim 4, wherein the functional unit further includes an upper plate motor configured to adjust an angle of the display, and
the display is connected to the motor and has an adjustable angle according to information about the user's location or the location of the user's face.

6. The robot of claim 3, wherein the functional unit further includes a speaker configured to output sound, and
the speaker outputs sound corresponding to the facial expression image output by the display.

7. The robot of claim 1, wherein the functional unit includes one or more microphones configured to receive the user's voice signal, and
identifies the user's location based on the voice signal received by the microphone and responds to the user's instruction.

8. The robot of claim 1, wherein the functional unit includes a storage stand having an open upper side and having a space formed therein, and
transports an object accommodated in the internal space of the storage stand.

9. The robot of claim 8, wherein the storage stand charges a mobile phone accommodated in the internal space.

10. The robot of claim 8, wherein the storage stand includes a communication device configured to transmit and receive information to and from the mobile phone accommodated in the internal space.

11. The robot of claim 10, wherein the storage stand further includes a display configured to display the information, and
outputs the information onto the display based on the information received from the mobile phone through the communication device.

12. The robot of claim 10, wherein the storage stand further includes a speaker configured to output sound based on the information received from the mobile phone through the communication device.

13. The robot of claim 8, which moves according to a preset algorithm or the user's instruction and transports the object accommodated in the storage stand.

14. The robot of claim 8, wherein the storage stand includes a cup holder formed with a space in which a drink container is accommodated.

15. The robot of claim 14, wherein the cup holder includes a heating wire configured to transfer heat to the drink container.

16. The robot of claim 14, wherein the cup holder includes a heat-insulating member configured to reduce a change in temperature of the drink container.

17. The robot of claim 1, wherein the functional unit includes:
a lighting device including one or more light sources;
a lighting motor configured to move the lighting device; and
a speaker configured to provide sound.

18. The robot of claim 17, wherein the functional unit further includes a wireless communication module configured to communicate with an external terminal.
